(19) Europäisches Patentamt
European Patent Office
Office européen des brevets

(11) **EP 1 317 109 B1**

(12) **EUROPEAN PATENT SPECIFICATION**

(45) Date of publication and mention
of the grant of the patent:
**23.12.2009 Bulletin 2009/52**

(51) Int Cl.:
***H04L 29/06*** *(2006.01)*   ***G06F 17/30*** *(2006.01)*

(21) Application number: **01128541.8**

(22) Date of filing: **29.11.2001**

(54) **System and method for controlling the adaptation of adaptive distributed multimedia applications**

System und Verfahren zur Steuerung der Anpassung von adaptiven verteilten Multimedia-Anwendungen

Système et procédé pour contrôler l'adaptation des applications multimédia distribuées adaptatives

(84) Designated Contracting States:
**DE FR GB**

(43) Date of publication of application:
**04.06.2003 Bulletin 2003/23**

(73) Proprietor: **Sony Deutschland GmbH**
**10785 Berlin (DE)**

(72) Inventors:
• **Röhrle, Klaus,**
**Sony International (Europe) GmbH**
**70327 Stuttgart (DE)**
• **Schramm, Oliver,**
**Sony International (Europe) GmbH**
**70327 Stuttgart (DE)**
• **Bosau, Detlev,**
**University of Stuttgart**
**70565 Stuttgart (DE)**

(74) Representative: **Rupp, Christian et al**
**Mitscherlich & Partner**
**Patent- und Rechtsanwälte**
**Postfach 33 06 09**
**80066 München (DE)**

(56) References cited:
**EP-A- 1 113 628     EP-A- 1 158 740**

• **ASHISH N. DESAI: "AN ADAPTIVE QoS MECHANISM FOR MULTIMEDIA APPLICATIONS IN HETEROGENEOUS ENVIRONMENTS" THESIS, [Online] October 2001 (2001-10), pages 1-56, XP002196136 Retrieved from the Internet: <URL:http://www.caip.rutgers.edu/TASSL/Thesis/ashish-thesis.pdf> [retrieved on 2002-04-15]**
• **OTT M ET AL: "An architecture for adaptive QoS and its application to multimedia systems design" COMPUTER COMMUNICATIONS, ELSEVIER SCIENCE PUBLISHERS BV, AMSTERDAM, NL, vol. 21, no. 4, 10 April 1998 (1998-04-10), pages 334-349, XP004115276 ISSN: 0140-3664**
• **BARZILAI T P ET AL: "DESIGN AND IMPLEMENTATION OF AN RSVP-BASED QUALITY OF SERVICE ARCHITECTURE FOR AN INTEGRATED SERVICES INTERNET" IEEE JOURNAL ON SELECTED AREAS IN COMMUNICATIONS, IEEE INC. NEW YORK, US, vol. 16, no. 3, 1 April 1998 (1998-04-01), pages 397-413, XP000740059 ISSN: 0733-8716**

**Description**

FIELD AND BACKGROUND OF THE INVENTION

The underlying invention generally relates to the field of Distributed Multimedia Systems (DMSs), applications and technologies in heterogeneous communication networks with high-speed access. It includes research and development issues which are especially related to multimedia middleware, Quality-of-Service (QoS) Management, adaptive applications, mobile terminals and wireless communication. In this context, the invention presents a sophisticated middleware framework implemented on a client supporting distributed multimedia applications to dynamically adapt to varying resource availability. The middleware framework enables the applications to specify the media they want to use and the relationships between these media. Using this information from all running applications, the middleware framework calculates the adaptation possibilities and controls the adaptation process.

The integration of multimedia into a distributed computing environment opens up a large spectrum of possibilities for new and exciting applications. Since multimedia is relevant to a wide range of application domains, such as entertainment, information retrieval and business systems, and is potentially deployable on a magnitude of end systems, the problem of supporting multimedia is a substantial one. In a distributed environment, the structural description of a multimedia document can be stored apart from the media object content. Thereby, the applications reside on (mobile) clients but access or update information from remote servers using (wireless) networks.

Generally, multimedia data can be categorized into one of two classes: discrete or continuous. Discrete data, usually in the form of text and images, represents a sequence of individual elements which are time-independent. The resources required to support this form of data are often minimal, and can easily be computed a priori. On the other hand, continuous data (which includes audio, video and animation) represents information which incorporates an inherent temporal dimension that is directly relevant to the user's perception of the information.

Continuous media are particularly demanding on processing and communication resources, generally due to the large amount of information involved and its temporal sensitivity. Hence, a large part of continuous media processing is carried out by means of specialized peripherals and end system hardware technologies. Thereby, high-performance networking technologies, such as the Asynchronous Transfer Mode (ATM), provide sufficiently high bandwidths for the transmission of continuous media streams. In general, continuous media streams such as video and audio can be transmitted and presented in different qualities, and the quality desired by the user or offered by an information provider largely influences all system parts, such as end systems and routers.

In this context, the design of distributed multimedia applications, such as systems providing an access to remote multimedia databases or teleconferencing, requires a careful consideration of QoS monitoring and resource management issues to provide end-to-end QoS guarantees for a large number of applications. Increased platform heterogeneity and varying resource availability in distributed systems motivate the design of resource-aware applications, which ensure a desired performance level by continuously adapting their behavior to changing resource characteristics. Thereby, the presentation quality, varying network load and stringent real-time requirements of continuous media streams require a relatively high utilization of networking bandwidth and processing power in the end systems.

For applications running in a shared environment which rely on the transfer of continuous media data, the allocation and management of these resources is an important question. It is essential that QoS is assured system-wide, including the application, the middleware, the operating system and the network. However, the majority of conventional systems is based on best-effort approaches. In general, these best-effort approaches are not suitable for DMSs because some users may be ready to pay higher prices for obtaining a maximum quality, while others may prefer low-cost presentations with lower quality. Additionally, for a teleconferencing application involving many users, a single QoS level may not be appropriate for all participating users, since some users may participate with a very limited local workstation which cannot provide the quality which is adopted by the majority of the conference participants. Therefore, distributed multimedia applications must be provided with different levels of quality, often corresponding to different levels of cost.

To date, much work on QoS management has been done in the context of high-speed networks providing Asynchronous Transfer Mode (ATM) in order to guarantee a specific QoS for the provided communication service characterized by the bandwidth of the media stream and the delay, delay jitter and packet loss rate provided by the network. Further QoS application requirements include:

- performance requirements (e.g. timeliness of execution and relative processing speed requirements),

- reliability requirements (e.g. high availability and relative failure recovery requirements), and

- security requirements (e.g. authentication and privacy).

In general, two possible ways exist to cope with resource management in complex heterogeneous DMSs:

- First, guaranteed resource allocation can be maintained and enforced in spite of the cost in terms of complexity and overhead.

- Second, applications (and other system components) can be developed which are more tolerant to inevitable fluctuations in the supporting environment's performance. This leads to the notion of "adaptive applications" designed to cope with unexpected QoS variations due to dynamically changing resource situations.

Despite the apparent novelty of the term "adaptive application", conventional configurable and tailorable programs according to the state of the art let users activate only modules which are needed in a particular context. Thereby, programs can be adapted to their hardware and operating system environment, e.g. to the available memory size, the presence of a floating-point coprocessor, or the I/O environment. These programs often automatically recognize the available resources (such as displayed size and type); if not, an adaptation is done manually at installation time. Other types of adaptivity include option negotiation for recognizing the parameters of remote components (such as terminals and modems), and program reconfigurability in fault-tolerant systems. Furthermore, error detection and correction in conventional communication protocols as mechanisms to adapt these protocols to changing transmission QoS can be considered.

BRIEF DESCRIPTION OF THE PRESENT STATE OF THE ART

According to the state of the art, different methods and technologies are currently available concerning QoS Management in DMSs, which are closely related to the topic of the underlying invention. In order to understand the context of the invention, it is necessary to briefly explain the main features involved with said technologies.
Today, the processing of multiple streams is generally facilitated by means of a resource sharing, managed by the operating system. This results in the potential to offer a wide range of QoS properties that define both how the end-user perceives the multimedia information and how the operating system should manage the associated end system and network resources. This characteristic is important since there is a finite limit to the number of multimedia streams the end system and network resources can successfully handle. Therefore, when end system or network resources are stretched to near capacity, policies, defined by either the end-user or an administrator, are used to automate share balancing.
Many multimedia data-types, particularly video, are processed and rendered through specialized end system devices. In parallel with the progression of multimedia, there have also been extensive advances in network communications technology. Fast-Ethernet (100 MBit/s) and Gigabit-Ethernet now enable relatively inexpensive communication in the field of Local Area Networks (LANs). Asynchronous Transfer Mode (ATM) technologies offer a variety of network bandwidths from 25 MBit/s to the desktop and 2.4 GBit/s in the backbone. Furthermore, ATM can provide firm QoS guarantees on network traffic catering for media types that are resource-sensitive, such as audio and video. Similar advances can be seen in the area of public wireless networks with upcoming technologies like GPRS (115 Kbit/s) and UMTS (2 Mbit/s) and wireless local area networks like WaveLan (54 Mbit/s) or HyperLAN (54 Mbit/s). The later one also includes QoS Management. Combined together, the advances in multimedia and network communications enable the deployment of sophisticated distributed multimedia applications. The deployment of interactive television, electronic publishing, tele-shopping, tele-medicine, tele-education, entertainment and gaming applications is now feasible. In reality, however, their success is impaired by an insufficient standardization across different technologies, coupled with a general lack of resources and support for distributed application development.
To address the problems of insufficient QoS management support, the concept of "middleware", a distributed homogeneous layer composed of generic support in the form of software libraries and services, was introduced. Originally, middleware was used to represent an enabling technology for client-server applications, allowing a client application to access heterogeneous database servers. It now represents a wide range of value-added software services that lie above the operating system and beneath the application. For this reason, services at this level are able to directly interact with each other. Thereby, in order to assure higher-level QoS, it is often necessary to utilize resource management mechanisms deployed within the operating system layers. However, conventional middleware technologies like CORBA, DCOM and Java RMI cannot provide QoS guarantees, although they have proved adequate for the development of elastic (as opposed to real-time) distributed applications.
Middleware services supporting QoS-aware applications can be provided according to one of the following two principal approaches; namely, the reservation-based and the adaptation-based approaches. The first approach requires to implement complex resource reservation, admission control and resource negotiation mechanisms. In contrast, the second approach requires to implement mechanisms that periodically monitor the resource availability of the execution environment, and provide applications with appropriate adaptation and reconfiguration properties.
Further activities in the field of adapting distributed multimedia applications to resource availability can be taken from the academic work of the authors Fangzhe Chang and Vijay Karamcheti. In their dissertation "A Framework for Automatic Adaptation of Tunable Distributed Applications" (published in Cluster Computing: The Journal of Networks, Software Tools and Applications, 2001) the authors focus on automatically adapting distributed applications to changes in the characteristics and availability of resources in dynamic, heterogeneous execution environments. The adaptation trades off among different resource requirements, application configurations, and output qualities based on user preferences to produce a desired execution behavior. Thereby, a framework is proposed that exposes alternate forms of application composition and execution, acquires the resource usage profiles of the application on a virtual execution environment, monitors the underlying resource availability, and automatically configures the application in response to changes of resource conditions. The disclosed framework has been applied to both distributed and parallel applications and shows significant improvement in performance and satisfaction of user preferences.

A parallel work has been conducted in the "Broadband Radio Access for IP-based Networks" (BRAIN) project. Within that context, the main aspect was not to support adaptation control but to create a QoS framework offering resource guarantees for multimedia streams.

The document "An adaptive QoS mechanism for multimedia applications in heterogeneous environments" by Ashish N. Desai, October 2001, discloses an adaptive QoS mechanism with a multimedia server and a multimedia client. The client performs the tasks of receiving application data via Real-time Transport Protocol (RTP), generating RTP Control Protocol (RTCP) receiver report to inform the server about the reception status, and receiving and processing RTCP sender reports to maintain the transmission statistics. The server aims to optimize the overall performance of the streaming application for individual client groups by controlling the frame rate to minimize the average packet loss. It monitors the state of the clients subscribed to each media type using the RTCP receiver reports corresponding to the media type, and maintains a running average of the packet loss suffered by each client group.

The document EP 1158740 A relates to a processing system and to pieces of software for one or more communication networks. Applications are provided with a platform- and network-independent framework for achieving cross-adaptability by providing components for QoS management in the communication network(s) by means of a component coordinator unit.

The document EP1113628 A relates to methods and systems for delivering QoS on IP packet based connections over a wireless link. A layered QoS management architecture is provided, which performs the QoS control over the entire communication protocol stack of a wireless network. The architecture consists of two levels of IP QoS management with an adaptation interface between them.

The document "An architecture for adaptive QoS and its application to multimedia systems design" by Ott M et al., 10 April 1998, describe a distributed multimedia system. Each layer of its software architecture deals with QoS using a generic API (application programming interface) for communicating QoS parameters and values to layers above and below. The aggregation of these parameters and values is called a service contract. The API allows for reporting of contract violations as well as dynamic renegotiation of the contract terms.

The document "Design and implementation of an rsvp-based quality of service architecture for an integrated services internet" by Barzilai T P et al, 1 April 1998, presents a protocol architecture for an integrated services Internet architecture supporting a multitude of classes and types of services. It is based on the RSVP protocol for resource reservation in the Internet.

PROBLEMS TO BE SOLVED BY THE INVENTION

Multimedia applications request timely transmission of their data. This translates into the requirement that networks provide a sufficient Quality of Service (QoS). This is especially difficult in wireless networks as the QoS in these networks (e.g. bandwidth, delay, jitter) varies on a large scale.

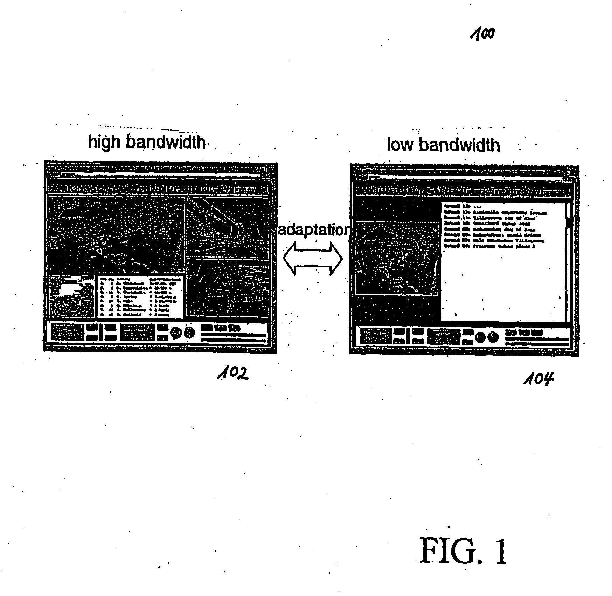

To cope with this situation, multimedia applications should be adaptive. They should be able to operate based on best-effort environments and attempt to adapt to a varying resource availability for the purpose of providing the best possible experience for the user on the available resource conditions, and achieving the most graceful quality degradation in case of scarce resources. Fig. 1 exhibits an example 100 of an adaptive application for adapting two multimedia scenarios 102 and 104 with different bandwidths and different QoS requirements.

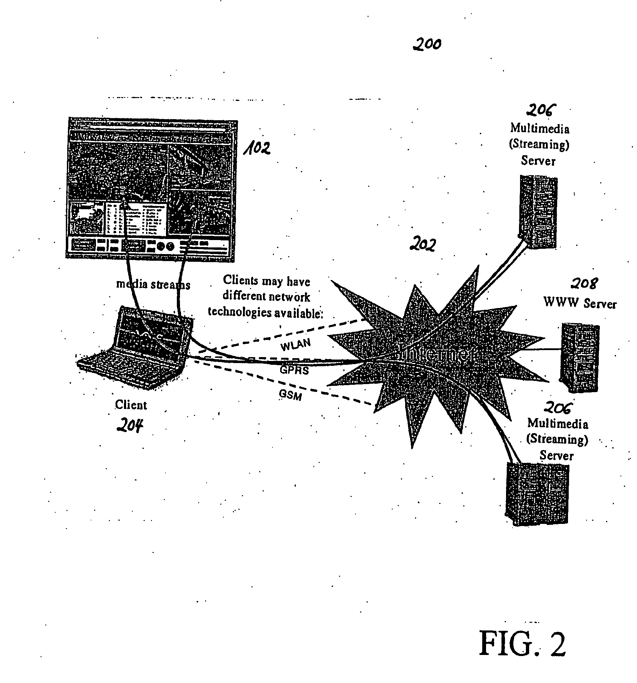

In the scenario 200 depicted in Fig. 2, the adaptation control is done by the client 204, as the client 204 knows best about its resources and how it wants to utilize them. The involved servers 206 and 208 are able to support the adaptive decisions of the client 204 by providing data at various qualities. Resources taken into account for the adaptation are local resources like CPU and memory as well as network resources such as the available bandwidth.

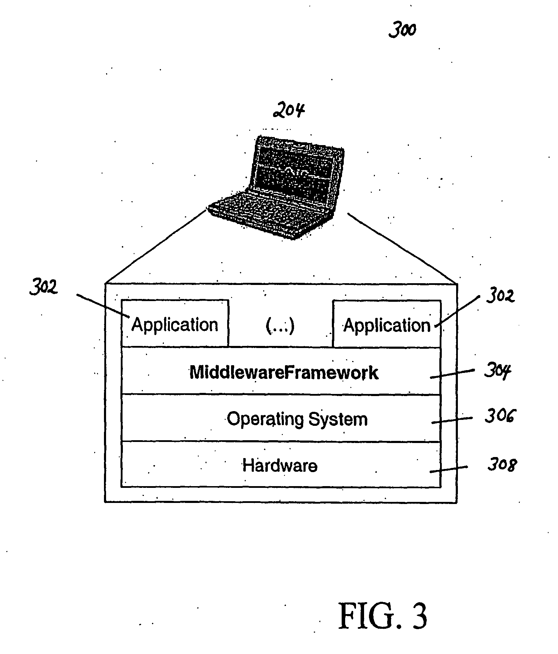

Thereby, as can be taken from the client architecture 300 depicted in Fig. 3, it is advantageous to introduce a middleware framework 304 on the client 204 to support adaptive multimedia applications 302 due to several reasons:

- The middleware framework 304 can coordinate different applications 302 running on the client 204.

- Without any support, each application 302 would have to program such functionality on its own - which is not very efficient.

- The middleware framework 304 does not require tight integration or modifications in the kernel of the employed operating system and in the network protocol stack.

Some major problems such a middleware framework 304 has to solve are:

- to allow applications 302 to describe their adaptation possibilities, and

- to control the adaptation process (for all running applications) in such a way that, on any resource conditions, the adaptation process is steered towards maximum achievable user satisfaction.

A problem solved by the invention is the problem of insufficient QoS management support.

OBJECT OF THE UNDERLYING INVENTION

In view of the explanations mentioned above, it is an object of the underlying invention to propose a novel technology supporting Distributed Multimedia Systems (DMSs), applications and technologies in heterogeneous communication networks with high-speed access to dynamically adapt to varying resource availability.

This object is achieved by means of the features of the independent claims. Advantageous features are defined in the dependent claims. Further objects and advantages of the invention are apparent in the following detailed description.

SUMMARY OF THE INVENTION

The proposed solution is basically dedicated to a sophisticated middleware framework implemented on a client targeted to support distributed multimedia applications to dynamically adapt to varying resource availability. Thereby, said framework calculates the adaptation possibilities and controls the adaptation process using information from all running applications. It enables the applications to specify the media they want to use and the relationships between these media. Furthermore, the framework is specialized enough to offer a lot of support functionality for the employed applications, but still general enough to support a wide range of applications. Parts of the framework can also be used in other application domains, in which the behavior of an application has to be controlled based on a set of measured parameters.

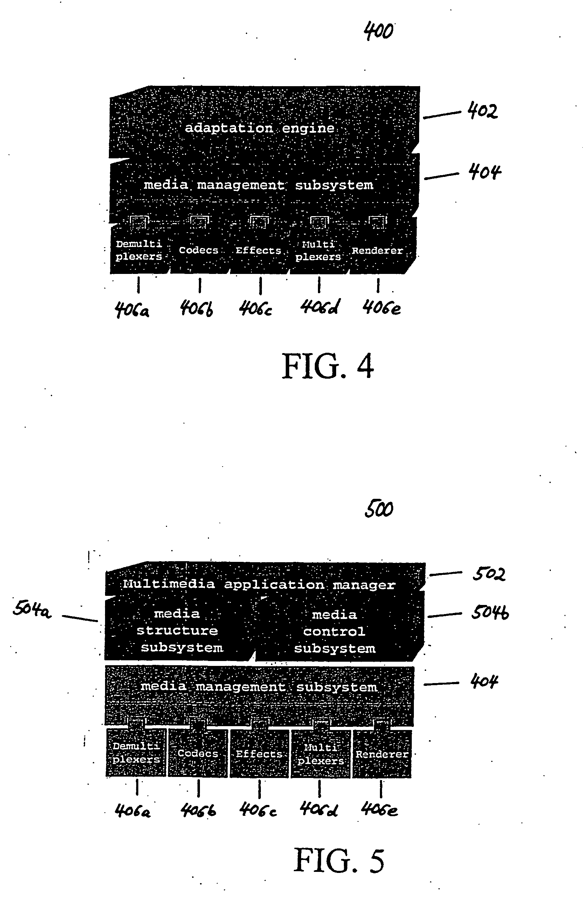

An architecture 400 of a middleware framework 304 as depicted in Fig. 4 which is able to perform the described tasks needs at least two parts:

- a media handling system for managing multimedia data, e.g. the Java Media Framework, DirectShow, Quicktime, or MPEG-21, and

- a component for controlling the adaptation, a so-called "Adaptation Engine", having various links to the media handling subsystem, e.g. to obtain measurements of media parameters.

In the following, the focus will be on the second part, assuming that a media handling system is in place.

The invention is defined by the independent claims. The dependent claims define advantageous embodiments.

The invention particularly refers to a middleware framework implemented on a client targeted to support distributed multimedia applications in heterogeneous communication networks to dynamically adapt to varying resource availability. Thereby, said middleware framework allows each running distributed multimedia application to specify the media it wants to use and the relationships between these media, calculates the adaptation possibilities, and controls the adaptation process.

Next, the invention is directed to a method for operating said middleware framework.

Moreover, the invention refers to a client connected to a client-server architecture of a distributed computing environment, which comprises said middleware framework, and performs a method for operating said middleware framework.

A client system consisting of different client terminals communicating over a network is disclosed, in which one part of the resources is controlled by at least one Central Resource Controller for all client terminals.

Finally, the invention refers to a multimedia document browser for running multimedia retrieval applications on a client terminal, in which said middleware framework and said method for operating a middleware framework is applied.

BRIEF DESCRIPTION OF THE DRAWINGS

Further advantages and possible applications of the underlying invention result from the subordinate claims as well as from the following description of the preferred embodiment of the invention which is depicted in the following drawings:

Fig. 1 shows an example 100 of an adaptive application for adapting two multimedia scenarios 102 and 104 with different bandwidths and different Quality of Service (QoS),

Fig. 2 illustrates an example 200 for a multimedia retrieval application with distributed servers 206 and 208, and one client 204 connected to the Internet 202,

Fig. 3 shows a client architecture 300 comprising a middleware framework 304,

Fig. 4 presents an overall architecture 400 of the middleware framework 304 comprising an Adaptation Engine 402 and a Media Management Subsystem 404,

Fig. 5 shows a detailed block diagram 500 of the overall architecture 400 of the middleware framework 304,

Fig. 6 shows an example 600 of a media structure tree,

Fig. 7 exhibits an overview of an architecture 700 comprising a Media Structure Subsystem 504a (MSS),

Fig. 8 exhibits a block diagram 800 showing the interfaces 802b of the Media Control Subsystem 504b (MCS) to other subsystems 404, 504a, 804 and 806, -

Fig. 9 presents an overview 900 of the Media Control Subsystem 504b (MCS),

Fig. 10 shows an example 1000 of a client consisting of different terminals 204 and a central communication management 1002, called Central Resource Controller (CRC),

Fig. 11 shows an example 1100 of distributed client terminals 204 with two Central Resource Controllers 1002 (CRCs), and

Fig. 12 presents an example 1200 of an application with a multimedia document browser 1202 using the middleware framework 304.

DETAILED DESCRIPTION OF THE UNDERLYING INVENTION

In the following, the preferred embodiment of the underlying invention as depicted in Figs. 5 to 12 shall be explained in detail.
The Adaptation Engine 402 as depicted in Fig. 4 consists of two main subsystems 504a+b, as can be taken from the block diagram 500 in Fig. 5:

- the Media Structure Subsystem 504a, which gets information from the applications 302, and aggregates this information to a list of possible configurations - the so-called "adaptation space", and
- the Media Control Subsystem 504b implementing a control loop which dynamically selects a configuration based upon the current resource availability, implements it, and notifies the affected applications 302.

In the following, the term "media item" shall be used as an abstraction for different kinds of media. Furthermore, it shall be distinguished between "discrete media items" (e.g. images) and "continuous media items" representing time-based media (e.g. audio or movie clips). Sometimes, continuous media items can be controlled concerning their quality and resource consumption. These media items 614 shall be called "controllable media items". Controllable media items 614 offer a set of configurations, each resulting in a different resource consumption. An user of controllable media items 614 can dynamically switch between different configurations. Controllable media items 614 offer information about the configurations they support, including the resource consumption of each configuration. The resource consumption for a resource can be specified using an exact value, or by specifying a value range.
In the following, the main components of the Adaptation Engine 402, as depicted in Fig. 5, shall be described in detail.

### 1. Multimedia Application Manager

A Multimedia Application Manager 502 (MAM) is a component which is responsible for offering the Application Programming Interface (API) of the Adaptation Engine 402 to the applications 302. When using the Adaptation Engine 402, the applications 302 will primarily interact with the MAM 502. Therefore, it acts as a wrapper 802a for the other components of the Adaptation Engine 402.

The multimedia application 302 also manages the other subsystems of the Adaptation Engine 402. During start-up it builds and connects the contained subsystems. During shut-down it calls the corresponding methods to decouple and to deallocate the other subsystems.

If different implementations of a subsystem exist, the MAM 502 can be configured which one it should use.

### 2. Media Structure Subsystem (MSS)

To allow the middleware framework 304 to automatically make adaptation decisions, applications 302 have to transfer knowledge about the involved media items 614 and the requirements and restrictions for the usage of these media items 614 to the middleware framework 304.

Using the MSS API, a multimedia application 302 can specify the media items 614 it wants to use and the relationships among these media items 614 (together called a "media structure"). Relationships between media items 614 are specified by rules like "Play media item A, B and C in parallel."

Thereby, the following rule classes can be distinguished:

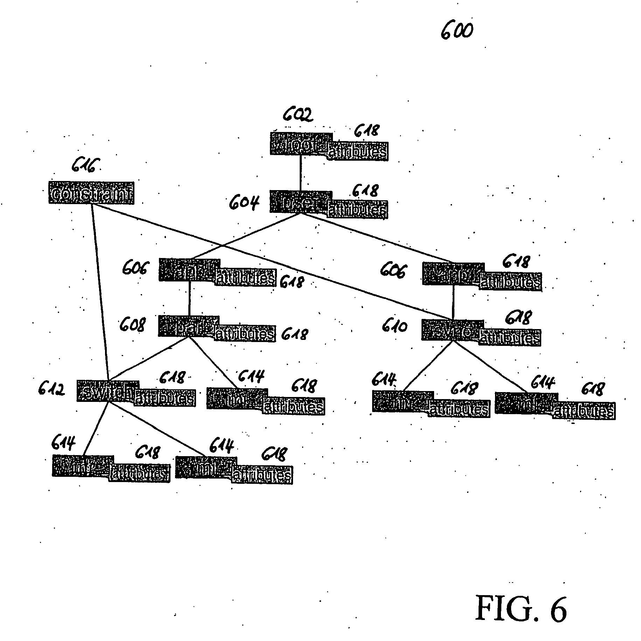

- Aggregates that combine multiple media items 614 into so-called "media elements": Thereby, a media element can itself be a child of another media element. The resulting structure is a tree with the media items 614 as leaves, as can be taken from Fig. 6.

- Media element attributes 618 which are associated to a media element: One important attribute is the "priority" of a media element for an application 302. An important type of attributes 618 are constraints for the media element. For example, they make it possible that the contained media items 614 do not exceed a certain bandwidth.

- Media item attributes 618 which are associated to a media item: In contrast to media element attributes 618, media item attributes 618 additionally includes media parameters, e.g. for a movie clip the codec, the duration, the size and others. Thereby, controllable media items 614 describe their controllable parameters using media item attributes 618.

- Additional constraints being similar to the ones given as attributes 618 but not associated to a media item 614 or media element: These constraints can be created between any number of media items 614 and media elements.

The applications 302 communicate their rules by creating corresponding data structures that are added to a global data structure managed by the middleware framework 304. To create such a data structure, the applications 302 need to create media items 614, aggregates, add attributes 618 to these aggregates, combine the aggregates to an aggregate tree 600.as depicted in Fig. 6, add additional constraints, and commit the resulting data structure to the middleware framework 304.

Thereby, the applications 302 can use the following aggregates:

- The <sync> node 610 specifies that the contained media items 614 should be played in a synchronized manner.

- The <par> node 608 specifies that all contained media elements should be played in parallel.

- The <seq> node 609 specifies that all contained media elements should be played sequentially.

- The <switch> node 612 specifies that the contained media elements can be played alternatively. It is the most important aggregate for an adaptation as it allows the application 302 to define different adaptation possibilities. Moreover, a <switch> node 612 may contain an empty alternative.

The MSS 504a itself additionally manages two other aggregates:

- The <app> node 606 contains all media structures of one application 302.

- The <user> node 604 contains all media structures of one user.

- The <root> node 602 is the root of the media structure which contains all other aggregates known to the system.

Other aggregates, e.g. representing other groups, may be added. If one Adaptation Engine 402 is used to make an adaptation decision for a set of client systems, these systems may also be modeled by corresponding aggregates.
As a result, the MSS 504a manages one media structure tree 600 for the whole system. The tree 600 consists of media elements and media items 614 both with associated attributes 618. On top of this structure, additional constraints can be added which have connections to at least two nodes of the tree 600 (media elements or media items 614). The tree 600 changes dynamically as the applications 302 add or remove media structure information.
The following grammar in Extended Backus-Naur Form (EBNF) notation shows the rules on how to build a media structure tree 600:

```
<root> ::= <user> {<user>} <attributes>
<user> ::= <app> {<app>} <attributes>
<app> ::= <media group> {<media group>} <attributes>
<media group> ::= <media element> I
                  <media item> <attributes>
<media element> ::= <par> | <switch | <seq> | <sync>
<par> ::= <media element> | <media item>
          {<media element> | <media item>}
<switch> ::= <media element> I <media item>
             {<media element> | <media item>}
<seq> ::= <media element> | <media item>
          {<media element> | <media item>}
<sync> ::= <media item> {<media item>}
<media item> ::= <media locator> <media attributes>
```

Not shown in this grammar are the definitions of media locator, media attributes and attributes 618. Media locators can be Uniform Resource Locators (URLs), but also other addressing mechanisms can be used. Here, the attributes 618 are not specified as for each aggregate arbitrary attributes 618 can be used (key-value pairs). The grammar also does not show the possibility to add constraints. Constraints can be added to any existing set of aggregates.
The first three rules are used only by the middleware framework 304 itself. <user> nodes 604 are created and removed whenever the user logs in or out of the system. <app> nodes 606 are created whenever an application 302 starts, and removed when the application 302 stops. The middleware framework 304 can also add constraints either automatically to reflect system or regulatory constraints, or on user requests.
The other rules are used by the applications 302. Each time an application 302 commits a media structure to the middleware framework 304, it is added as a child to the corresponding <app> node 606. Thereby, the applications 302 can dynamically add media structures.
The resulting data structure is a graph containing information from the applications 302 and from the middleware framework 304. Each node in the graph can have additional information in the form of attributes 618.
One of the main tasks of the MSS 504a is to calculate a list of alternative configurations by using the media structure. This list is needed by the Media Control Subsystem 504b (MCS) to make adaptation decisions. It therefore must contain all information needed to make those decisions.
A configuration is defined by a set of media items 614 which have to be played in parallel plus a list of attributes 618. A list of configurations therefore describes different choices that result from the evaluation of the media structure. Therefore, the configuration list is a description of the adaptation space.
For calculating the configuration list, the MSS 504a takes the information from the <switch> aggregates 612 and the different configurations of controllable media items 614 into account. This means that two configurations differ either in at least one media item 614 or in one configuration of a controllable media item 614.
The MSS 504a further associates a list of attributes 618 to each configuration (such as a priority, which is calculated using the priorities from the aggregates). Using information from the media items 614, an estimation about the resources (bandwidth, CPU, memory) needed to run the contained media items 614 is assigned to each configuration.
To achieve all these tasks, the MSS 504a consists of four components: MediaStructureFactories 704, MediaStructureRobots 710, a ConfigurationListManager 706 and a MediaStructureManager 702, which shall be explained in detail in the following sections.

a) MediaStructureFactories

Each time an application 302 starts to use the Adaptation Engine 402 services, it is given to a MediaStructure-Factory 704 component. The MediaStructureFactory 704 implements the interface

- for constructing media structures,

- to commit media structures to the middleware framework 304,

- to remove media structures, and

- to dynamically change parts of the media structure.

Thereby, it is one of the most important components an application 302 needs for using the middleware framework 304 as it allows the application 302 to specify its adaptation possibilities.

For building a media structure, other components are needed as well. Basically, a correspondent component type exists for each aggregates type. The same applies for constraints and media items 614. In the following, all these components are called "media structure components". The MediaStructureFactory 704 allows to create instances of media structure components and to combine these "building blocks" to a media structure.

To all of these media structure components, attributes 618 can be added. Attributes 618 are specified as key-value pairs. There is a number of attributes 618 which can be "understood" by the Adaptation Engine 402. For these attributes 618, the syntax and semantics is defined by the Adaptation Engine 402. Nevertheless, the application 302 may also add parameters which the Adaptation Engine 402 does not know. This has two reasons:

- First, the Adaptation Engine 402 is extensible. Therefore, these attributes 618 may be evaluated by one of the extensions.

- Second, the attributes 618 may be given back to the application 302 after an adaptation. This is especially useful for media items 614. For example, the application 302 may store attributes 618 describing the position on the screen where the media item 614 should be shown. When the Adaptation Engine 402 decides to play the media item, it informs the application 302. In doing so, the Adaptation Engine 402 also includes the media item attributes 618 of the corresponding media item. The application 302 now knows how to position the media item 614 without having to remember all this information in a separate data structure.

Media item parameters are especially important as they play a central role in the adaptation process. If the application 302 does not specify the needed media item parameters, the middleware framework 304 tries to obtain the missing information itself. For example, this can be done by using the DESCRIBE method of the Real-Time Streaming Protocol (RTSP), or by accessing public available meta information about the media item.

The MSS 504a allows using different kinds of MediaStructureFactories 704. Different MediaStructureFactories 704 allow building media structures of different complexities. The applications 302 can request a specific kind of MediaStructureFactory 704. Some applications 302 may only need to build simple media structures, and therefore prefer to use a simple interface, whereas other applications 302 may want to create complex structures, and therefore need more complex interfaces.

As media structure components have to implement well-defined interfaces 802b and 902, it is possible to add new types of aggregates (then also new types of MediaStructureRobots 710 are needed) or new versions of existing aggregate types. This is an useful example for an application 302 which does not want to define its media structures, but wants to compute its configuration list by other means or when the configuration list is fix. In such a case, the application 302 can e.g. use an own <application> aggregate which just provides the configuration list of the application 302 without the middleware framework 304 knowing how it was created.

b) MediaStructureRobots

MediaStructureRobots 710 are components that traverse the media structure for either manipulating the structure or for retrieving information from the structure. MediaStructureRobots 710 are an implementation of the so-called "Visitor Pattern".

These MediaStructureRobots 710 consists of two parts: the basic part for traversing the media structure, and a pluggable component for performing actions on the structure. The advantage of this approach is that there can be different algorithms used for traversing the graph by different MediaStructureRobots 710. This can also dynamically be exchanged. For example, one algorithm may be more appropriate when the media structure is small, and another one when the media structure is more complex.

The MSS 504a uses different kinds of MediaStructureRobots 710: the StructureOptimizer 710a, the StructureVerifier 710b, the AdmissionControlRobot 710c, and the ConfigurationListCreator 710d, which shall now be described in detail:

- The StructureOptimizer 710a is used whenever an application 302 commits a media structure to the middleware framework 304, or when the middleware framework 304 changes the structure. Thereby, it tries to simplify the media structure. This is done by removing unnecessary aggregates (e.g. a <par> node 608 inside another <par> node 608), and combining constraints if possible.

- The StructureVerifier 710b is invoked whenever an application 302 commits a media structure to the middleware framework 304, or when the middleware framework 304 changes the structure. It checks whether the structure has inconsistencies. As the MediaStructureFactories 704 do not allow to create "illegal" structures, the basic structure has not to be verified. Instead, the StructureVerifier 710b tests whether there are semantic inconsistencies. For example, semantic inconsistencies can occur when using constraints which contradict each other.

- The AdmissionControlRobot 710c is invoked whenever an application 302 commits a media structure. It works on the committed media structure before it is added to the global structure. It finds the minimum and maximum resource requirements of the new structure and decides (based on a configurable policy) whether the new structure is accepted or rejected.

- The ConfigurationListCreator 710d is used whenever the media structure has changed. It creates a configuration list from the media structure. This MediaStructureRobot 710 is the most important one as the MSS 504a task is to compute the configuration list out of the media structure. The configuration list is the basis for adaptation decisions. The ConfigurationListCreator 710d can compute the configuration list using the whole media structure tree 600 or just a part of the tree, e.g. for one application 302. The resulting configuration list is given to the ConfigurationListManager 706.

In this context, it should be noted that the MSS 504a allows to add and/or replace MediaStructureRobots 710.

c) ConfigurationListManager

The ConfigurationListManager 706 is responsible for maintaining the configuration list. It synchronizes the access to the configuration list, which is written by the ConfigurationListCreator robot and read from the Media Control Subsystem 504b (MCS). Additionally, it has a pluggable interface 802b for adding components that manipulate the configuration list. In the following, these components are called ConfigurationListManipulators 708. As the configuration list represents the adaptation space, there are many possible usages for ConfigurationListManipulators 708. For example, they may act as filters on the configuration lists, thereby performing one of the following tasks:

- Removing configurations whose resource requirements are beyond the capabilities of the system: For example, these capabilities can be computed from the device profile of the system, which contains a description of the parts the system is composed of. This is especially interesting if future mobile terminals can dynamically change their capabilities by logically enhancing the device with other devices in its surrounding using technologies like JINI or Universal Plug-and-Play.

- Implementation of user-defined rules like "don't play audio": Such rules can easily be implemented by removing configurations which do not apply to the rule.

- Implementation of regulatory issues, e.g. if the system is used for the driver console in a car: When driving faster than a specified speed only audio is allowed. Therefore, all other configurations have to be removed until the car is driving slower again.

- Removing configurations whose resource requirements are exceeding the capabilities of the device.

- Checking the availability of the media items 614, and removing configurations where media items 614 are not accessible or not available.

- Adding new configurations, e.g. by using locally available converters or network services which manipulate multimedia streams.

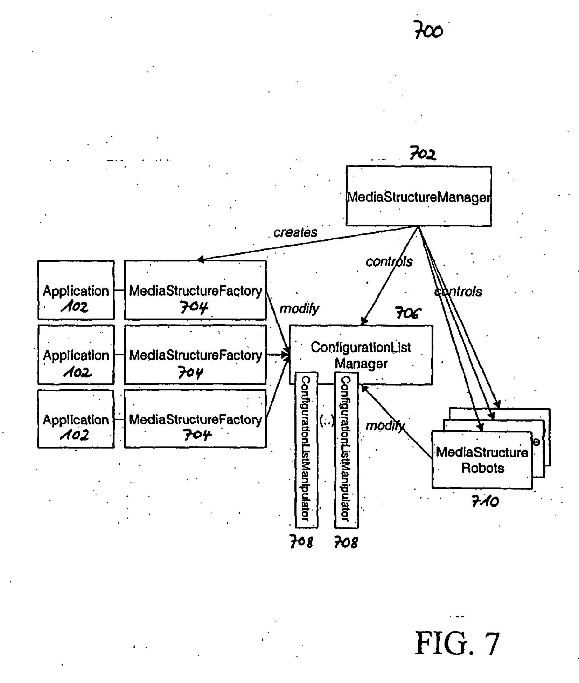

As shown in Fig. 7, ConfigurationListManipulators 708 may not only act as filters but can also modify the configuration list in any way including changes to the priorities or resource consumption estimations of configurations. Additional parameters can also be added. One example would be a parameter for giving a measurement about how different the configurations are in terms of user perception (here called the "visual distance" between configurations). Two configurations that only differ in media configurations of controllable media items 614 have a shorter visual distance than two configurations which have only a subset of media items 614 in common .

If the configuration list is empty at the end of the processing, special measurements can be taken, e.g. a re-computation of the configuration list with a minimal set of ConfigurationListManipulators 708, or an addition of ConfigurationListManipulators 708, thereby increasing the number of configurations.

The ConfigurationListManager 706 informs users of the configuration list that the list has changed via corresponding events.

d) MediaStructureManager

The MediaStructureManager 702 is the controller of the MSS 504a. It coordinates the other components and implements parts of the public interface 902 of the MSS 504a (e.g. for getting a MediaStructureFactory 704).

Besides, the MediaStructureManager 702 coordinates the other components by invoking them in the right order (this applies especially for MediaStructureRobots 710). Which components are called in which order is configurable. This allows to add and/or remove functionality (for example an admission control is not always needed), or to use new enhanced types of robots. An overview of the MSS 504a is given in Fig. 7.

3. Media Control Subsystem (MCS)

The Adaptation Engine 402 implements a control loop which selects a configuration from the configuration list, and implements it by starting and configuring the contained media items 614 and informing the corresponding applications 302.

The selection is based on the current resource situation and the attributes 618 associated to each configuration.

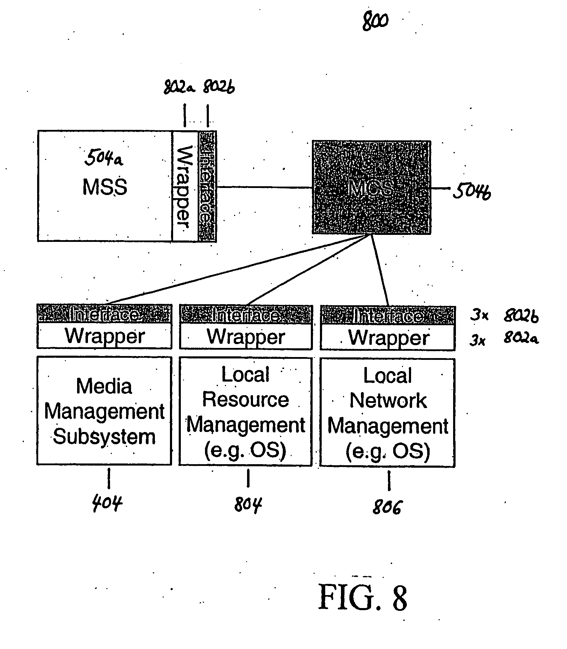

The adaptation process is triggered by events that originate from other subsystems and the operating system 306, as can be taken from the block diagram 800 in Fig. 8:

- The MSS 504a sends events upon changes in the configuration list.

- The Media Management Subsystem 404 is supposed to periodically send status events from running media items 614. These events contain measured information of media and transmission parameters like frame rate or packet loss.

- The Local Resource Management 804 is supposed to notify problems, e.g. if the overall CPU or memory consumption exceeds certain thresholds, or if the battery is running low.

- The Local Network Management 806 is supposed to send events about the currently used access network or networks and about switches between these access networks.

The MCS 504b defines interfaces 802b to all of the subsystems 504a, 404, 804 and 806. As the subsystems 504a, 404, 804 and 806 do not implement these interfaces 802b per se, so-called wrappers 802a are needed which add the required functionality. For example, if the Media Management Subsystem 404 cannot provide the required events itself, a wrapper 802a is needed which adds this functionality, and implements the interface 802b required by the MCS 504b. Of course, wrappers 802a may be developed for different subsystems of the same kind. For example, in the case of the Media Management Subsystem 404, wrappers 802a may be developed for Quicktime and for the Java Media Framework (JMF). The MCS 504b allows using different subsystems of the same kind in parallel. For example, Quicktime and the JMF can be used in parallel if the corresponding wrappers 802a exist.

The MCS 504b manages all incoming events and decides when an adaptation decision has to be made. For this decision, the following (conflicting) aspects are taken into account:

- Agility: The user expects to see a graceful adaptation when resources get scarce. The system has therefore to react quickly on resource shortages.

- Stability: The MCS 504b has to avoid annoying the user by switching too often between different configurations that have a high perceptual difference.

It also defines the target of the adaptation by specifying the limit of the local resources the new configuration is allowed to use.

During the decision process, a new configuration is selected. This selection process has different requirements:

- It has to meet the specified target in terms of resource usage.

- It has to select the configuration which offers the best user experience (which is not mandatory the one whose resource consumption is closest to the target).

- It also has to take stability issues into account.

After a decision has been taken, the MCS 504b has to implement the decision. It has to stop media items 614 which are not part of the new configuration, start media items 614 which are in the new configuration, set the media configurations of controllable media items 614, and send events to the affected applications 302.

The implementation of the configuration has direct effects 406c on the systems generating trigger events. The MCS 504b can therefore be seen as a control loop for controlling the media items 614 based on the current resource availability.

The MCS 504b consists of three components: TriggerEventManager 908, DecisionEngine 904 and ConfigurationImplementor 906, which shall be described in detail in the following sections.

a) TriggerEventManager

The TriggerEventManager 908 receives the events from the other subsystems. For events which are generated periodically (e.g. CPU usage), additional filters can be added. An example would be to add an exponential weighted moving average filter that provides a smoothed average of the most recent observation and all past observations.

In the case of a problem (e.g. if the bandwidth of the access network has dropped significantly), the TriggerEventManager 908 will receive events from different sources. It therefore has to deal with bursts of events. Then, it has to combine the information from all events to find out the reason for the problem (e.g. whether the frame rate of a stream is going down because there is not sufficient bandwidth or not enough CPU power, or if the corresponding server 206 is overloaded). Depending on this reason, different adaptations may be required.

The TriggerEventManager 908 contains the logic to decide when an adaptation is necessary. When there are notifications about problems, an immediate reaction upon that must follow. If there are notifications that additional resources are available, the decision to do an adaptation depends on other properties as well (e.g. to achieve stability). In such a case, the decision possibly depends on the time since the last adaptation, and on the visual distance caused by it.

Additional to the events, the TriggerEventManager 908 can actively ask for data. (The methods therefore are also designed in the interfaces 910.) Using both methods, the TriggerEventManager 908 has a good knowledge about the current resource consumption, and - in case of a problem - about the amount of missing resources. It can therefore calculate a target in terms of the resource usage for the Adaptation Engine 402. For the network resources, the target can include overall information as well as targets for specific network routes. For example, the traffic to note X should not exceed the available bandwidth $B_X$.

Since the implementation of an adaptation takes some time (as media streams may have to be started), the TriggerEventManager 908 assures that there is a configurable period of time after an adaptation where no new adaptation can be performed, and where all incoming events are ignored. In the following, this period of time shall be called the "protection period".

If the sender of trigger events are only capable of sending events in case of problems, the TriggerEventManager 908 may use one of the following three approaches:

- Making of own measurements: For example, this can be done with the available bandwidth for a specific route - a value that is normally not notified if it is increasing.

- Probing: In this case, the TriggerEventManager 908 triggers the DecisionEngine 904 periodically or based on an heuristic model to switch to the configuration with the next higher resource consumption. Thereby, the probing behavior must be configurable by the user.

- Allowing the user to specify when to adapt and to which configuration, e.g. via a Graphical User Interface (GUI): In this case, the Adaptation Engine 402 runs in an "half automatic" mode, where it is automatically reacting upon problems (resource shortages) but not when the situation gets better.

b) DecisionEngine

The TriggerEventManager 908 triggers the DecisionEngine 904. Moreover, the TriggerEventManager 908 provides a target in terms of the resource consumption for the Adaptation Engine 402. The DecisionEngine 904 gets the actual configuration list from the MSS 504a, and maintains knowledge about the current active configuration.

Having all these information, the DecisionEngine 904 selects the configuration to switch to. This decision can be made as follows:

- Each configuration contains attributes 618 describing its estimated resource consumption. The resource consumption is the primary set of parameters for selecting a configuration. Configurations that have a lower resource consumption than the targets are called "possible configurations". If there is no such configuration, the configuration which is the "closest" to the target is selected. In this case, the selection process is finished. To find out which configuration is the "closest" to the target, the DecisionEngine 904 contains a configurable metric for the "distance" between two sets of resource consumption parameters. It is configurable to allow the specification of different weights for each resource type. In some installations, bandwidth may be the most important parameter, in others (e.g. for small PDAs) it may be the CPU load. If no configuration can be found, events to the applications 302 are thrown. The applications 302 may have the possibility to change their media structure upon such an event. Which applications 302 are notified depends on the priority of the different applications 302. Alternatively or additionally to sending events, the DecisionEngine 904 can inform the user about the problem, who may then close media items 614 or applications 302. The behavior of the DecisionEngine 904 in such a case is configurable.

- If there is more than one possible configuration, the new configuration is selected by taking two additional configuration parameters into account: the priority of the configuration and the visual distance compared to the current configuration. These two parameters are aggregated to one by mapping the visual distance to a value that can be subtracted from the priority. The mapping function takes the time since the last configuration change into account. The longer the time since the last configuration change is, the smaller gets the value. The mapping function is configurable to adapt the behavior to the preferences of the users. For some users, stability will play a more important role than for others.

After having selected a configuration, the configuration information is passed to the ConfigurationImplementor 906 which implements the new configuration.

The DecisionEngine 904 can principally handle any kind of resources as it just matches the resource information in the configuration list with the target specified by the TriggerEventManager 908. This can be done by just comparing the names of the resources. From the point of view of the DecisionEngine 904, resources can therefore easily be added. Unfortunately, this is not so easy for the other components. To add a new resource means that the MSS 504a has to provide a resource estimation for the new resource, and the TriggerEventManager 908 has to get information about the correspondent resource situation to be able to specify a target. All these components are designed in such a way that the handling for additional resources can be added, but it involves some effort. To avoid this work, the Adaptation Engine 402 already contains logic for handling lots of different resources. Which of them are actually used depends on the availability of the resource information. For example, on a notebook the battery status is taken into account, which is not the case on a desktop computer. Whether a resource is used in the adaptation process depends upon whether the MSS 504a can provide an estimation of the resource usage for each configuration, and if the TriggerEventManager 908 can measure this resource usage. If both is true, the resource is taken into account.

Sometimes, users want total control about what is happening in their system. The DecisionEngine 904 therefore allows a "manual" mode, in which different configurations are presented to the user, and the user decides when to adapt and which configurations to use. In this case, no trigger events are automatically processed by the TriggerEventManager 908. Furthermore, the information contained in the events is visualized to help the user making decisions. In the manual and half-automatic mode, it makes also sense to allow the user to make not only a terminal-wide decision but to decide e.g. for individual applications 302. To make this possible, the ConfigurationListManager 706 has to provide the configuration lists for the <app> aggregates in the media structure. These can be visualized to the user per application, and the selected configuration can be implemented without changing the configurations of the other applications 302. The same approach can be performed with any other aggregate level in the media structure.

c) ConfigurationImplementor

The ConfigurationImplementor 906 gets as input from the DecisionEngine 904 the new configuration, and maintains information about the current configurations.

Its task is to implement the new configuration. This involves the following steps:

- stopping all media items 614 that are a part of the current configuration but not part of the new configuration,

- starting all media items 614 that are not part of the current configuration but part of the new configuration,

- setting off the media configuration of the new media items 614 if they are controllable,

- setting the media configurations of all controllable media items 614 that are part of the current and new configuration (if different from the current media configuration).

The ConfigurationImplementor 906 has to inform the corresponding application 302 about started or stopped media items 614. This is done by sending so-called adaptation events to the application 302, which - in case of a new media item 614 - also contain a reference to a media player object which can be used by the application 302 to play the media item 614 and to control it (starts, stop, pause, etc.). These events also include any parameters specified by the application 302 when defining its media structure but not used by the Adaptation Engine 402.

The ConfigurationImplementor 906 also maintains for each application 302 a control component (media controller) that allows the application 302 to simultaneously control all continuous media items 614 belonging to it (start, stop, pause, etc.). New continuous media items 614 are added to the corresponding media controller, stopped media items 614 are removed from it.

The problem when switching between different continuous media items 614 is at what position (media time) the new continuous media item 614 should start. The Adaptation Engine 402 supports different possibilities that can be specified for each continuous media item.

The possibilities are:

- Starting always from the beginning (media time = 0): This is the default for live streams, which do not have a specified duration.

- Starting always from a predefined time.

- Starting always from the last media time of the media item: In this case, if the media item 614 is started, stopped and then restarted again, it continues as the same time it has stopped.

- Using the time base of the corresponding <switch> aggregate 612: If there is a change between two media items 614 belonging to the same <switch> aggregate 612, they can start based on the time the first media item 614 in the <switch> aggregate 612 was started. This is called the "switch time base". Thus, a media item 614 starts at media time, which given by the following equation:

```
media time = current time - switch time base.
```

- Using the time base of the corresponding <app> aggregate 606: This is the same as already described for the <switch> aggregate 612. The media item 614 starts at a time based on the "app time base". Thereby, the media time is given by the following equation:

```
media time = current time - app time base.
```

- Using the "switch time base" or the "app time base" without taking times into account where there is no continuous media item 614 played in the corresponding <switch> aggregate 612 or <app> aggregate 606: An example for this would be a <switch> aggregate 612 with three media items 614: video_A, video_B and image. The first adaptation changes from video_A to image, and the second from image to video_B. Then, video_B starts at the last media time of video_A and not (as it would be the case with just using the switch time base) at the last media time of video_ A plus the time the image was displayed.

In theory, additional time bases could be added (e.g. for each aggregate), but the described ones are the ones which make most sense for the application 302. In any case, the application 302 has the possibility to change the media time before actually starting the media player contained in the adaptation event.

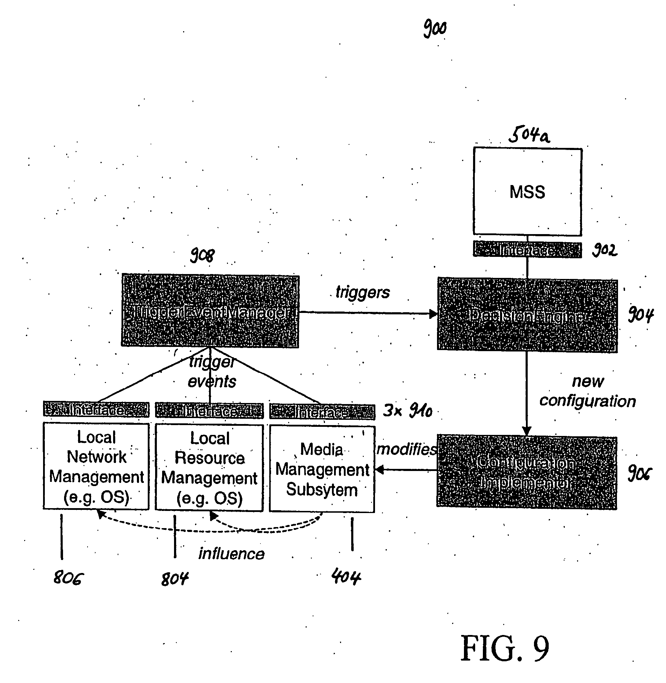

The ConfigurationImplementor 906 also contains the logic to use network reservation mechanisms if available. It may either use the mechanism itself, or use the interfaces 802b provided by other subsystems like the Media Management Subsystem 404 for doing the reservation. If the reservation fails, it sends a trigger event to the TriggerEventManager 908 containing the result of the reservation (which means the reason why it failed). The TriggerEventManager 908 then starts a new adaptation process with an adapted target. An overview of the MCS 504b is given in Fig. 9.

The Adaptation Engine 402 contains some components that are not part of the MSS 504a and the MCS 504b, but used by different components of the Adaptation Engine 402. Such common components offer services needed by a set of other components. Especially, two components are important: the adaptation context unit 912 and the Graphical User Interface (GUI) Manager 914.

- Adaptation context unit 912: Although the middleware framework 304 is targeted to be made of different components which are highly independent from each other, the components have to share a lot of information. Such information is stored in the adaptation context unit 912. It can be accessed by the components to store and retrieve data.

- GUI Manager 914: The Adaptation Engine 402 comprises a Graphical User Interface (GUI) which offers a comprehensive functionality, e.g. for providing user interaction and for monitoring the adaptation process. To fulfill this task, the GUI needs to have access to different components to retrieve data, and to manipulate the components. The GUI Manager 914 is a central component which offers an API with all the functionality the Adaptation Engine 402 offers for use by a GUI. Using this API, different GUIs can be developed. Inexperienced users may prefer a simple GUI with only little options, whereas experienced users may want to have detailed information about the adaptation process and more options to influence the adaptation process.

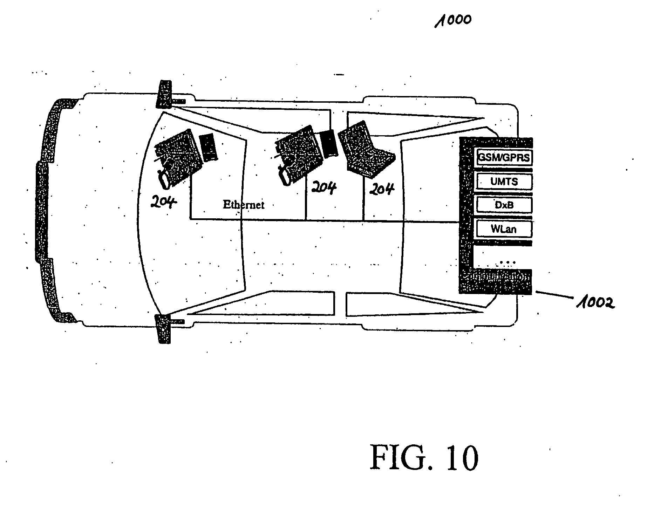

In some scenarios, as depicted in Fig. 10, the client system does not consist of only one client terminal 204 but of different client terminals 204 communicating over a Personal Area Network (PAN). For example, this is the case in car (or train) scenarios where different devices may use the car infrastructure for being connected to the Internet 202. In such scenarios some resources (e.g. network bandwidth) are not controlled by the client terminals 204 but at a central place accessible to all client terminals 204. These entities are called "Central Resource Controllers" 1002 (CRC). Thereby, the Adaptation Engine 402 has to work closely together with the CRCs 1002 to make useful adaptation decisions. Furthermore, in such a scenario the Adaptation Engine 402 has to be distributed on different nodes. In the following, it shall be assumed that there is only one CRC 1002, and a set of client terminals 204 using this CRC 1002. Thereby, a MSS 504a runs on each client terminal 204 to let the applications 302 define their media structure. The media structure is sent to the local MCS 504b which, in case of an adaptation, selects the set of possible configurations based upon the resources managed by the client terminal 204. The MCS 504b also modifies the list of possible configurations by aggregating the priority and visual distance. The resulting configuration list is sent to the CRC 1002. The CRC 1002 queries all other client terminals 204 for similar configuration lists and combines these into a global list of possible configurations by still maintaining the information about the original configurations. The MCS 504b of the CRC 1002 selects a configuration by taking the resource it is managing and the priority values of the configurations into account. Next, it looks up the original configurations that formed the selected configuration (during aggregation). Finally, it informs the correspondent client terminals 204 (to be more specific the ConfigurationImplementors 906 of the client terminals 204) about which configuration they have to implement.

In the described case, the adaptation is triggered by the TriggerEventManagers 908 of the client terminals 204. If the CRC 1002 can itself start the adaptation process, it does this by querying all client terminals 204 for their list of possible configurations.

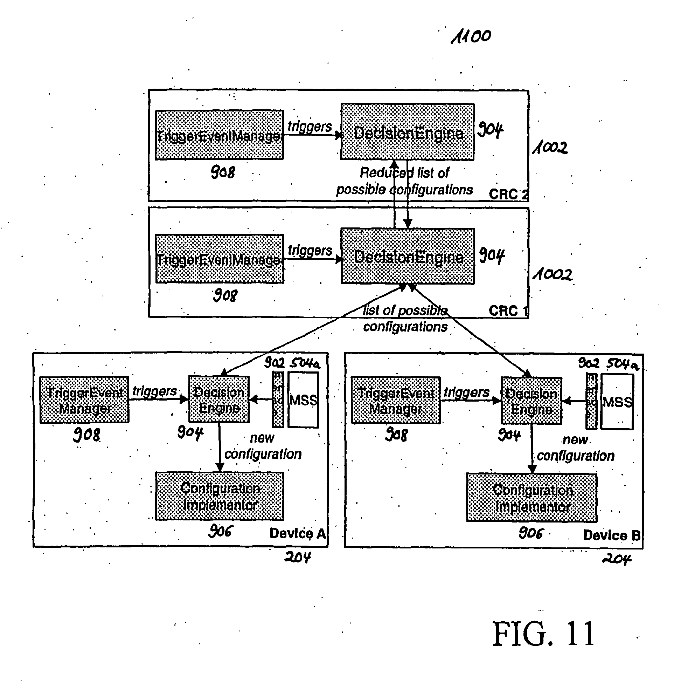

In this case, the actual decision process is distributed between the client terminals 204 and the CRC 1002. If there is more than one CRC 1002, the decision is further distributed. This is done by introducing an hierarchy between the CRCs 1002, as depicted in Fig. 11. The first CRC 1002 in the hierarchy computes the global list of possible configurations. It removes all configurations that are not possible due to the availability of the locally managed resources. The reduced list is then passed to the next CRC 1002 in the hierarchy which again removes the configurations not matching with its resource target. The last CRC 1002 in the hierarchy makes the final decision and informs the first CRC 1002 which in turn informs the client terminals 204 about the configurations to implement. If the information about how the configurations were assembled from the device configurations is passed along with the configuration list, the last CRC 1002 can directly inform the client terminals 204.

There are scenarios in which the user wants to switch to another client terminal 204 and wants to start the new client terminal 204 in exactly the same state as he left the original one. The Adaptation Engine 402 supports this if there is an Adaptation Engine 402 installed on both client terminals 204.

The Adaptation Engine 402 offers an API to programmatically retrieve and restore the internal status of the Adaptation Engine 402 for a specific user, for a specific application 302 or for the whole terminal. The status information can inbetween be transferred to the other client terminal 204. How the status information is transferred to the other client terminal 204 is out of the scope of the Adaptation Engine 402, as in such a scenario not only the status of the Adaptation Engine 402 has to be transferred but also the status of the application 302 and other subsystems. Therefore, an entity external to the Adaptation Engine 402 is needed to collect the different status information, to transfer it to the other client terminal 204, and to restore it again.

The status of the Adaptation Engine 402 comprises the media structure, the configuration list, the current configuration, and for each continuous media item 614 the current media time.

Using this information, the Adaptation Engine 402 on the target client terminal 204 can restore the original status. The first thing after restoring the information is to perform an adaptation as the target client terminal 204 may have different capabilities and a different resource availability than the original client terminal 204.

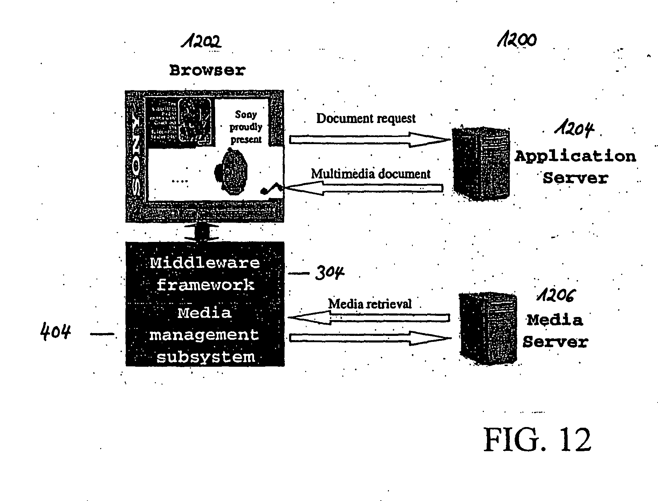

An example how the described middleware framework 304 according to the underlying invention could be used for multimedia retrieval applications 200 (in contrast to conversational and messaging applications 302) is to use a multimedia document browser 1202 on top of the proposed middleware framework 304 as depicted in Fig. 12. A multimedia document browser 1202 is very similar to standard Web browsers 1202, but presents documents containing multimedia content to the user. The document describes the layout of the multimedia presentation and contains references to the media items 614 which are separate from the document. By using a document language which allows specifying the media structure already in the document, the multimedia document browser 1202 could easily use the middleware framework 304. Furthermore, using the multimedia document browser 1202 makes it easy to develop adaptive multimedia applications 302 by writing such documents.

The significance of the symbols designated with reference signs as depicted in Figs. 1 to 12 can be taken from the appended table of reference signs.

In the following, the main advantageous differences between the preferred embodiment of the underlying invention and the state of the art shall be emphasized.

The described middleware framework 304 is unique in its functionality. It provides a middleware framework 304 for controlling the adaptation process for distributed multimedia applications 302. It especially takes the dynamic nature of wireless networks into account, and is therefore very well suited for mobile clients 204. The targeted application type is general enough to support a large number of applications 302 - and these applications 302 are the ones that definitely profit from, and need adaptation mechanisms in a mobile scenario. On the other hand, the targeted application type is special enough to provide rich adaptation support by incorporating domain knowledge in the Adaptation Engine 402.

For the targeted distributed multimedia applications 302, the middleware framework 304 offers a comprehensive support. In contrast to other frameworks, it uses domain knowledge and allows the applications 302 to specify their adaptation possibilities, thus taking detailed domain knowledge and adaptation knowledge into account for the adaptation process. Especially, properties and problems of streaming media are taken into account by the middleware framework 304.

In contrast to some other systems that support an adaptation based on static parameters, the middleware framework 304 supports a dynamic adaptation to change resource availability, user preferences and device constraints.

The middleware framework 304 allows applications 302 to get different levels of support from the middleware framework 304. Applications 302 wanting more control over their media can achieve this by giving less medium structure information to the middleware framework 304. The more information the application 302 provides, the more support it gets from the middleware framework 304. Therefore, various types of applications 302 can benefit from the proposed middleware framework 304 by using exactly the amount of support they need for accomplishing their tasks.

The middleware framework 304 includes very flexible mechanisms to enable the applications 302 to specify their adaptation knowledge. The provided mechanisms are general enough to support a wide range of applications 302 and do not restrict the applications 302 in their functionality.

Furthermore, the middleware framework 304 can very flexibly be configured and tailored to the user and application 302 needs. It can also easily be enhanced, and was designed to be useful in different scenarios ranging from small devices to client systems that consist of a set of distributed client terminals 204. The middleware framework 304 can even run in a distributed set-up to allow adaptation decisions in more complex client scenarios 1000.

The middleware framework 304 also takes the user requirements and preferences into account. It allows users a detailed specification of the control he/she wants to have over the adaptation process. With the concept of the so-called "visual distance" and various configuration options, the user can tailor the system to behave in a way which suits him best.

The middleware framework 304 is flexible enough to work together with a plurality of available systems. For example, it can use and work together with different existing Media Management Subsystems 404.

The middleware framework 304 is a client-only architecture that uses standard protocols and data types. It can therefore use the existing multimedia infrastructure, e.g. media servers 1206 and also available content. Thereby, no changes have to be made on the server or network side to use the middleware framework 304.

In Table 1, the underlying invention is compared with already known technologies according to the state of the art.

Table 1: Comparison to related work

| Technologies | Comment |
|---|---|
| Java Media Framework (JMF), DirectShow, MPEG-21, Quicktime | These technologies are not framework-supporting adaptations but media management systems that provide components for the actual media handling.<br><br>By contrast, the proposed middleware framework 304 can be seen as an extension to such media management systems adding adaptation support.<br><br>Some of the mentioned frameworks according to the state of the art foresee simple methods for adapting single media streams (e.g. by supporting an easy creation of different qualities of a video), whereas the middleware framework 304 proposed by the underlying invention can use all these methods.<br><br>Furthermore, one advantage of the proposed middleware framework 304 is that it is not bound to a specific media management system. |
| RealPlayer / SureStream Technology | The RealPlayer implements SMIL. Additionally, it allows using the SureStream technology that allows a single media item to dynamically adapt to different resource situations. An adaptation is then done in two steps:<br><br>- First, an alternative is selected using the information in the SMIL document.<br>- Second if the chosen stream is a Sure-Stream, it dynamically adapts to the resource situation.<br><br>The difference to the proposed middleware framework 304 according to the underlying invention is that there is no coordination between different running SureStreams. They are operating independently of each other, and there is a never a re-evaluation of the other alternative specified in the SMIL document. Moreover, SureStreams only adapt to bandwidth fluctuations, and not to other resources like CPU and memory. |

(continued)

| Technologies | Comment |
|---|---|
| TIEMPO | The main focus of TIEMPO was the development of a temporal model for multimedia presentations. The TIEMPO document language and presentation system also includes adaptation mechanisms. Especially, the dynamic scheduling of media items based on a bandwidth estimation mechanism is an adaptation mechanism that is not covered in the proposed middleware framework 304 according to the underlying invention. In contrast to the proposed middleware framework 304, the TIEMPO presentation system is not a middleware framework 304 but an integrated multimedia player. Therefore, adaptation decisions are only possible for the currently executed documents. In this context, it should be noted that the TIEMPO presentation system does not support multimedia applications 302 that are not document-based.<br>TIEMPO is also not targeted to wireless environments. Furthermore, TIEMPO's adaptation mechanism reacts slowly on bandwidth changes. The bandwidth estimation mechanisms used probably do not work correctly in a dynamic environment. Moreover, TIEMPO does not take actual measurements of the media items (e.g. packet loss) into account for the adaptation process. |

Table 2: Depicted Features and their Corresponding Reference Signs

| No. | Feature |
|---|---|
| 100 | example of an adaptive application for adapting two distributed multimedia application 302 scenarios with different bandwidths and different Quality of Service (QoS) in heterogeneous communication networks |
| 102 | window showing an example of a broadband distributed multimedia application scenario |
| 104 | window showing an example of a narrowband distributed multimedia application scenario |
| 200 | example for a multimedia retrieval application with distributed servers 206, 208 and one client 204 connected to the Internet 202 |
| 202 | Internet |
| 204 | client connected to the Internet 202 |
| 206 | multimedia (streaming) server connected to the Internet 202 |
| 208 | World Wide Web (WWW) server connected to the Internet 202 |
| 300 | client architecture comprising a middleware framework 304 |
| 302 | distributed multimedia application running on a client 204 |
| 304 | middleware framework 304 |
| 306 | operating system |
| 308 | hardware components |
| 400 | overall architecture of the middleware framework 304 comprising an Adaptation Engine 402 and a Media Management Subsystem 404 |
| 402 | Adaptation Engine |
| 404 | Media Management Subsystem |
| 406a | demultiplexer |
| 406b | codec |
| 406c | effects |

(continued)

| No. | Feature |
| --- | --- |
| 406d | multiplexer |
| 406e | renderer |
| 500 | detailed block diagram of the overall architecture 400 of the middleware framework 304 |
| 502 | Multimedia Application Manager (MAM) |
| 504a | Media Structure Subsystem (MSS) |
| 504b | Media Control Subsystem (MCS) |
| 600 | example of a media structure tree |
| 602 | <root> node of the media structure tree 600 |
| 604 | <user> node of the media structure tree 600 |
| 606 | <app> (application) node of the media structure tree 600 |
| 608 | <par> (parallel mode) node of the media structure tree 600 |
| 609 | <seq> (sequential mode) node of the media structure tree 600 |
| 610 | <sync> (synchronization) node of the media structure tree 600 |
| 612 | <switch> node of the media structure tree 600 |
| 614 | <mi> (media item) node of the media structure tree 600 |
| 616 | <constraint> node of the media structure tree 600 |
| 618 | attributes belonging to the nodes of the media structure tree 600 |
| 700 | overview of an architecture comprising a Media Structure Subsystem 504a (MSS) |
| 702 | MediaStructureManager |
| 704 | MediaStructureFactory |
| 706 | ConfigurationListManager |
| 708 | ConfigurationListManipulator |
| 710 | MediaStructureRobot |
| 710a | StructureOptimizer |
| 710b | StructureVerifier |
| 710c | AdmissionControlRobot |
| 710d | ConfigurationListCreator |
| 800 | block diagram showing the interfaces 802b of the Media Control Subsystem 504b (MCS) to other subsystems 404, 504a, 804 and 806 |
| 802a | wrapper connected to the Media Structure Subsystem 504a |
| 802b | interface between the Media Control Subsystem 504b and the wrapper 802a |
| 804 | Local Resource Management (e.g. operating system 306) |
| 806 | Local Network Management (e.g. operating system 306) |
| 900 | overview of the Media Control Subsystem 504b (MCS) |
| 902 | interface between the Media Structure Subsystem 504a and the DecisionEngine 904 |
| 904 | DecisionEngine |
| 906 | ConfigurationImplementor |
| 908 | TriggerEventManager |

(continued)

| No. | Feature |
|---|---|
| 910 | interface between the TriggerEventManager 908, the Media Management Subsystem 404 and the Local Network Management components 804 and 806, respectively |
| 912 | adaptation context unit |
| 914 | Graphical User Interface (GUI) Manager |
| 1000 | example of a client 204 consisting of different terminals and a central communication management 1002, called Central Resource Controller (CRC) |
| 1002 | Central Resource Controller (CRC) |
| 1100 | example of distributed client terminals 204 with two Central Resource Controllers 1002 (CRCs) |
| 1200 | example of an application with a multimedia document browser 1202 using the middleware framework 304 |
| 1202 | multimedia document browser |
| 1204 | application server |
| 1206 | media server |

Table 3: Used Terminology

| Term | Definition |
|---|---|
| Adaptation | Mechanisms altering the application behavior to compensate any fluctuations and/or even dramatic changes in data transmission and/or processing quality based on user requirements specifying said quality. These mechanisms can be included in the application or provided by some external entity (e.g. middleware). |
| Application | A computer program with an user interface. The underlying invention, however, addresses with this term also computer programs acting as service providers, as e.g. a Video-on-Demand server. This kind of applications usually does not locally feature any interaction with users, except for a system administration interface. |
| Component | A pre-fabricated customizable software unit featuring well-defined interfaces. Examples of components are Java-Beans, DCOM objects or CORBA objects. |
| Connection | Semi-permanent relationship between two nodes in a network. Within the context of said relationship, data can be exchanged in an exclusive and controlled manner. |
| Middleware framework | A set of correlated software units embodying an abstract design for solutions to a number of related problems. |
| User mobility | The ability of a user to access telecommunications services from different terminals and different networks, and the capability of the network to identify and authorize that user. |
| Terminal mobility | The ability of the terminal to access telecommunications services from different locations and, while in motion, the capability of the network to identify and locate the terminal. |
| Media item | A media item is an abstraction for different kinds of media. It can be further distinguished between discrete media items (e.g. images) and continuous media items that represent time-based media (e.g. audio or movie clips). Sometimes, continuous media items can be controlled concerning their quality and resource consumption.<br><br>In the context of the underlying invention, these media items 614 are called "controllable media items". |
| Media structure | A data structure that includes media items and relationships between media items. |

(continued)

| Term | Definition |
|---|---|
| Multimedia application | Multimedia applications or more general multimedia systems can be defined as follows (according to [Steinmetz93]):<br>"A multimedia system is characterized by a computer-based, integrated production, manipulation, representation, storage and communication of independent information, coded in at least one continuous (time-dependent) and one discrete (time-independent) medium." |
| Process | A part of a running software program or other computing operation that performs a single task. |
| Quality of Service (QoS) | "The collective effect of service performance which determines the degree of satisfaction of a user of the service." (Definition from the ITU-T [former CCITT] recommendation E.800) |
| Stream / Flow | The sequence of information being transmitted from the source end point to the destination end point of a given connection. |

Table 4: Used Abbreviations

| Abbr. | Explanation |
|---|---|
| API | Application Programming Interface |
| APP | Application |
| CPU | Central Processing Unit |
| CRC | Central Resource Controller |
| GPRS | General Packet Radio Service |
| GUI | Graphical User Interface |
| IETF | Internet Engineering Task Force |
| IP | Internet Protocol |
| JMF | Java Media Framework |
| MAC | Medium Access Control |
| MAM | Multimedia Application Manager |
| MCS | Media Control Subsystem |
| MI | Media item |
| MSS | Media Structure Subsystem |
| OS | Operating System |
| PDA | Personal Digital Assistant |
| QoS | Quality of Service |
| RTP | Real-Time Protocol |
| RTSP | Real-Time Streaming Protocol |
| SMIL | Synchronized Multimedia Integration Language |
| WLAN | WaveLAN |
| XML | Extensible Markup Language |

Table 5: Publications

| Abbr. | Publication |
|---|---|
| [Chang2000] | F. Chang, V. Karamcheti: "Automatic Configuration and Run-time Adaptation of Distributed Applications", Ninth IEEE Symposium on High Performance Distributed Computing, August 2000. |
| [Chang2001] | F. Chang, V. Karamcheti: " A Framework for Automatic Adaptation of Tunable Distributed Applications", Cluster Computing: The Journal of Networks, Software and Applications, Vol. 4, No. 1, 2001. |
| [Diot98] | C. Diot, C. Huitema, T. Turletti: "Multimedia Applications Should Be Adaptive", HPCS'95 Workshop, 1998. ftp://www.inria.fr/rodeo/diot/ncahpcs.ps.gz http://citeseer.nj.nec.com/ diot98multimedia. html |
| [Gamma95] | E. Gamma, R. Helm, R. Johnson, J. Vlissides: "Design Patterns, Elements of Reusable Object-Oriented Software", Addison-Wesley 1995, ISBN 0-201-63361-2. |
| [Gecsei97] | J. Gecsei: "Adaptation in Distributed Multimedia Systems", IEEE Multimedia, Vol. 4 2, April-June 1997, Pages 58-66. |
| [Li2000] | B. Li: "Agilos: A Middleware Control Architecture for Application-Aware Quality-of-Service Adaptations", PhD Dissertation, Department of Computer Science, University of Illinois at Urbana-Champaign, May 2000. |
| [Noble2000] | B. Noble: "System Support for Mobile, Adaptive Applications", IEEE Personal Communications, Vol. 7, No. 1, February 2000. |
| [Noble97] | B. Noble, M. Satyanarayanan, D. Narayanan, J.E. Tilton, J. Flinn, K. Walker: "Agile Application-Aware Adaptation for Mobility", Proceedings of the 16th ACM Symposium on Operating System Principles, October 1997, St. Malo, France. |
| [Satyanarayanan94] | M. Satyanarayanan, B. Noble, P. Kumar, M. Price: "Application-Aware Adaptation for Mobile Computing", Proceedings of the 6th ACM SIGOPS European Workshop, September 1994, Dagstuhl, Germany. |
| [Satyanarayanan96] | M. Satyanarayanan: "Fundamental Challenges in Mobile Computing", 15th ACM Symposium on Principles of Distributed Computing, May 1996, Philadelphia, PA. Revised version appeared as: "Mobile Computing: Where's the Tofu?", Proceedings of the ACM Sigmobile, April 1997, Vol. 1, No. 1. |
| [Shulz98] | H. Schulzrinne, A. Rao, R. Lanphier: "Real-Time Streaming Protocol (RTSP)", IETF Request for Comments: 2326, April 1998. |
| [SMIL98] | "Synchronized Multimedia Integration Language (SMIL) 1.0 Specification", W3C Recommendation, 15th June 1998. |
| [Steinmetz93] | R. Steinmetz, "Multimedia-Technologie: Einführungen und Grundlagen", Springer-Verlag, 1993. |
| [SureStream] | Real Networks Whitepaper: "SureStream™ - Delivering Superior Quality and Reliability" http://www.realnetworks.com/devzone/library/ whitepapers/surestrm.html [Accessed: 26th September 2001]. |
| [Voge195] | A. Vogel, B. Kerhervé, G. v. Bochmann, J. Gecsei: "Distributed Multimedia and QoS: A Survey", IEEE MultiMedia 2(2): 10-19, 1995. |
| [Wah195] | T. Wahl, S. Wirag, K. Rothermel: "TIEMPO: Temporal Modeling and Authoring of Interactive Multimedia", in: IEEE 2nd. Intl. Conference on Multimedia Computing and Systems, Washington D.C., USA, May 1995, pp. 274-277. |
| [Wirag97] | S. Wirag, R. Steinmetz, L.C. Wolf (Eds.): "Modeling of Adaptable Multimedia Documents", Interactive Distributed Multimedia Systems and Telecommunication Services, 4th International Workshop, IDMS'97, Darmstadt, Germany, September 1997, pp. 420-429. |

**Claims**

1. A middleware framework system implemented on a client (204) targeted to support distributed multimedia applications (302) in heterogeneous communication networks to dynamically adapt to varying resource availability, comprising:

    - at least one Media Management Subsystem (404) for managing multimedia data to periodically send status events from running media items (614), which contain measured information of media and transmission parameters,
    - at least one Adaptation Engine (402) for controlling the adaptation of said distributed multimedia applications (302) to the current resource availability, wherein the Adaptation Engine (402) comprises:
    - at least one Multimedia Application Manager (502), which is responsible for offering the Application Programming Interface of the Adaptation Engine (402) to the distributed multimedia applications (302),
    - at least one Media Structure Subsystem (504a), which is adapted to get information from the distributed multimedia applications (302), and to aggregate this information to a list of possible configurations, and
    - at least one Media Control Subsystem (504b) which is adapted to implement a control loop which dynamically selects a configuration based upon the current resource availability, to implement it and to notify the affected distributed multimedia applications (302)

    wherein the Media Control Subsystem (504b) defines interfaces (802b) to the Media Structure Subsystem (504a), the Media Management Subsystem (404), at least one Local Resource Management (804) and at least one Local Network Management (806) by using wrappers (802a) adding the required functionality,
    **characterized in that**
    the Media Control Subsystem (504b) is adapted to

    - manage all incoming events that originate from the Media Structure Subsystem (504a), the Media Management Subsystem (404), the Local Resource Management (804) and the Local Network Management (806),
    - decide when an adaptation decision has to be made,
    - define the target of the adaptation by specifying the limit of the local resources a new configuration is allowed to use,
    - select a new configuration, and
    - implement the decision by stopping media items (614) which are not part of the new configuration, starting media items (614) which are part of the new configuration, setting the media configurations of controllable media items (614), and sending events to the affected distributed multimedia applications (302).

2. A middleware framework system according to claim 1,
    **characterized in that**
    said Multimedia Application Manager (502) is adapted to connect the contained subsystems during the start-up of a distributed multimedia applications (302), and to call the corresponding methods to decouple and deallocate the other subsystems during the shut-down of said distributed multimedia applications (302).

3. A middleware framework system according to anyone of the claims 1 and 2,
    **characterized in that**
    the Media Structure Subsystem (504a) comprises:

    at least one MediaStructureFactory (704), which is adapted to implement the interface for constructing media structures, to commit media structures to the middleware framework system (304), to remove media structures, and to dynamically change parts of the media structure,
    at least one MediaStructureRobot (710), which is adapted to traverse the media structure for either manipulating the structure or for retrieving information from the structure,
    at least one ConfigurationListManager (706), which is adapted to synchronize the access to the configuration list read from the Media Control Subsystem (504b), and adapted to add ConfigurationListManipulators (708) that are adapted to manipulate the configuration list, and
    at least one MediaStructureManager (702), which is adapted to create the MediaStructureFactories (704) and to control the MediaStructureRobots (710) and the ConfigurationListManager (706).

4. A middleware framework system according to anyone of the claims 2 to 3,
    **characterized in that**

the Media Structure Subsystem (504a) is adapted to perform the following actions:

management of a media structure tree (600) consisting of media elements and media items (614) both with associated attributes (618), which change dynamically as the distributed multimedia applications (302) add or remove media structure information, calculation of a list of alternative configurations describing different choices that result from the evaluation of the media structure, which is needed by the Media Control Subsystem (504b) to make adaptation decisions,

association of a list of attributes (618) to each configuration by using the priorities from the aggregates,

assignment of an estimation about the resources needed to run the contained media items (614) to each configuration by using information from the media items (614).

5. A middleware framework system according to anyone of the claims 3 to 4,
**characterized in that**
the Media Structure Subsystem (504a) is adapted to use different kinds of MediaStructureRobots (710):

at least one StructureOptimizer (710a), which is used to simplify the media structure whenever a distributed multimedia application (302) commits a media structure to the middleware framework system (304), or when the middleware framework system (304) changes the media structure,

at least one StructureVerifier (710b), which is applied to check whether the media structure has semantic inconsistencies, and invoked whenever a distributed multimedia application (302) commits a media structure to the middleware framework (304), or when the middleware framework (304) changes the media structure,

at least one AdmissionControlRobot (710c), which is employed to find the minimum and maximum resource requirements of a new media structure, and to decide whether the new media structure is accepted or rejected, and which is invoked whenever a distributed multimedia application (302) commits a media structure,

at least one ConfigurationListCreator (710d), which is applied to create a configuration list from the media structure given to the ConfigurationListManager (706) in order to make adaptation decisions, and invoked whenever the media structure has changed.

6. A middleware framework system according to anyone of the claims 3 to 5,
**characterized in that**
the Media Structure Subsystem (504a) is adapted to allow an addition and/or replacement of MediaStructureRobots (710).

7. A middleware framework system according to anyone of the claims 3 to 6,
**characterized in that**
the ConfigurationListManipulators (708) is used as filters on the configuration lists, thereby performing one of the following tasks:

removing configurations whose resource requirements are beyond the capabilities of the applied distributed multimedia application (302),

executing user-defined rules by removing configurations which do not apply to these rules,

executing regulatory issues in exceptional cases by removing other configurations, removing configurations whose resource requirements exceed the capabilities of the applied distributed multimedia application (302),

checking the availability of the media items (614) and removing configurations where media items (614) are not accessible or not available, and

adding new configurations by using locally available converters or network services which manipulate multimedia streams.

8. A middleware framework system according to anyone of the claims 3 to 7,
**characterized in that**
the ConfigurationListManipulators (708) is used to modify the configuration list to change the priorities or resource consumption estimations of configurations.

9. A middleware framework system according to anyone of the claims 3 to 8,
**characterized in that**
the ConfigurationListManager (706) informs users of the configuration list via corresponding events if the configuration list has been modified.

**10.** A middleware framework system according to anyone of the claims 3 to 9,
**characterized in that**
the MediaStructureManager (702) invokes the MediaStructureRobots (710) in a predefined order.

**11.** A middleware framework system according to anyone of the claims 2 to 10, **characterized in that** the Media Control Subsystem (504b) comprises:

at least one TriggerEventManager (908), which receives said events from the Media Management Subsystem (404), the Local Resource Management (804) and the Local Network Management (806), finds out the reason for problems indicated by said events, and provides a target in terms of the resource consumption for the Adaptation Engine (402) depending on that reason,
at least one DecisionEngine (904) triggered by the TriggerEventManager (908), which gets the actual configuration list from the Media Structure Subsystem (504a), maintains knowledge about the current active configuration, and selects a new configuration to switch to, and
at least one ConfigurationImplementor (906), which gets as input from the DecisionEngine (904) the new configuration, maintains information about the current configurations, and implements said new configuration.

**12.** A middleware framework system according to anyone of the claims 1 to 11,
**characterized in that**
the TriggerEventManager (908) contains a logic to decide when an adaptation is necessary depending on the availability of resources and stability issues.

**13.** A middleware framework system according to anyone of the claims 1 to 12,
**characterized in that**
after the implementation of an adaptation the TriggerEventManager (908) assures that there is a configurable period of time where no new adaptation can be performed, and where all incoming events are ignored.

**14.** A middleware framework system according to anyone of the claims 1 to 13,
**characterized in that**
the TriggerEventManager (908) is able to make own measurements using the available bandwidth for a specific route, triggers the DecisionEngine (904) periodically or based on an heuristic model to switch to the configuration with the next higher resource consumption, or allows the user to specify when to adapt and to which configuration if the Media Management Subsystem (404), the Local Resource Management (804) and the Local Network Management (806) are only capable of sending events in case of problems.

**15.** A middleware framework system according to anyone of the claims 1 to 14,
**characterized in that**
the DecisionEngine (904) is adapted to allow a manual mode, in which different configurations and the information contained in the events are presented to the user who decides when to adapt and which configurations to use.

**16.** A middleware framework system according to anyone of the claims 1 to 15,
**characterized in that**
the implementation of a new configuration by the ConfigiuationImplementor (906) involves the following steps:

stopping all media items (614) that are a part of the current configuration but not part of the new configuration,
starting all media items (614) that are not part of the current configuration but part of the new configuration,
setting off the media configuration of the new media items (614) if they are controllable,
setting the media configurations of all controllable media items (614) that are part of the current and new configuration if they are different from the current media configuration.

**17.** A middleware framework system according to anyone of the claims 2 to 16,
**characterized in that**
the ConfigurationImplementor (906) informs the corresponding distributed multimedia application (302) about started or stopped media items (614) by sending adaptation events to the respective distributed multimedia application (302) which - in case of a new media item (614) - also contain a reference to a media player object which can be used by the distributed multimedia application (302) to play said media item (614) and to control it.

**18.** A middleware framework system according to anyone of the claims 1 to 17,

**characterized in that**
the ConfigurationImplementor (906) maintains a media controller for each distributed multimedia application (302) that allows the distributed multimedia application (302) to simultaneously control all continuous media items (614) belonging to it by adding new continuous media items (614) to the corresponding media controller, and removing stopped media items (614) from it.

19. A middleware framework system according to anyone of the claims 1 to 18,
**characterized in that**
the ConfigurationImplementor (906) comprises a logic to use network reservation mechanisms if available.

20. A middleware framework system according claim 19,
**characterized in that**
in case of a reservation failure the ConfigurationImplementor (906) sends a trigger event containing the reason for said failure to the TriggerEventManager (908), which then starts a new adaptation process with an adapted target.

21. A middleware framework system according to anyone of the claims 2 to 20,
**characterized in that**
the Adaptation Engine (402) additionally comprises:

at least one adaptation context unit (912), which is used to store and retrieve adaptation data,
at least one Graphical User Interface Manager (914), which offers an Application Programming Interface for providing user interaction and monitoring the adaptation process.

22. A method implemented on a client (204) targeted to support distributed multimedia applications (302) in heterogeneous communication networks to dynamically adapt to varying resource availability, wherein:

- at least one Media Management Subsystem (404) manages multimedia data to periodically send status events from running media items (614), which contain measured information of media and transmission parameters,
- at least one Adaptation Engine (402) controls the adaptation of said distributed multimedia applications (302) to the current resource availability,

wherein:

- at least one Multimedia Application Manager (502) comprised in the Adaptation Engine (402) offers the Application Programming Interface of the Adaptation Engine (402) to the distributed multimedia applications (302),
- at least one Media Structure Subsystem (504a) comprised in the Adaptation Engine (402) gets information from the distributed multimedia applications (302), and aggregates this information to a list of possible configurations, and
- at least one Media Control Subsystem (504b) comprised in the Adaptation Engine (402) implements a control loop which dynamically selects a configuration based upon the current resource availability, implements it and notifies the affected distributed multimedia applications (302),

wherein the Media Control Subsystem (504b) defines interfaces (802b) to the Media Structure Subsystem (504a), the Media Management Subsystem (404), at least one Local Resource Management (804) and at least one Local Network Management (806) by using wrappers (802a) adding the required functionality,
**characterized in that**
the Media Control Subsystem (504b) performs the following steps:

- managing all incoming events that originate from the Media Structure Subsystem (504a), the Media Management Subsystem (404), the Local Resource Management (804) and the Local Network Management (806),
- deciding when an adaptation decision has to be made,
- defining the target of the adaptation by specifying the limit of the local resources a new configuration is allowed to use,
- selecting a new configuration, and
- implementing the decision by stopping media items (614) which are not part of the new configuration, starting media items (614) which are part of the new configuration, setting the media configurations of controllable media items (614), and sending events to the affected distributed multimedia applications (302).

**23.** A method according to claim 22,
**characterized in that**
said Multimedia Application Manager (502) connects the contained subsystems during the start-up of a distributed multimedia applications (302), and calls the corresponding methods to decouple and deallocate the other subsystems during the shut-down of said distributed multimedia applications (302).

**24.** A method according to anyone of the claims 22 and 23,
**characterized in that**
at least one MediaStructureFactory (704) comprised in the Media Structure Subsystem (504a) implements the interface for constructing media structures, commits media structures to the middleware framework system (304), removes media structures, and dynamically changes parts of the media structure,
at least one MediaStructureRobot (710) comprised in the Media Structure Subsystem (504a) traverses the media structure for either manipulating the structure or for retrieving information from the structure,
at least one ConfigurationListManager (706) comprised in the Media Structure Subsystem (504a) synchronizes the access to the configuration list read from the Media Control Subsystem (504b), and adds ConfigurationListManipulators (708) that are adapted to manipulate the configuration list, and
at least one MediaStructureManager (702) comprised in the Media Structure Subsystem (504a) creates the MediaStructureFactories (704) and controls the MediaStructureRobots (710) and the ConfigurationListManager (706).

**25.** A method according to anyone of the claims 23 to 24,
**characterized in that**
the Media Structure Subsystem (504a) performs the following actions:

management of a media structure tree (600) consisting of media elements and media items (614) both with associated attributes (618), which change dynamically as the distributed multimedia applications (302) add or remove media structure information, calculation of a list of alternative configurations describing different choices that result from the evaluation of the media structure, which is needed by the Media Control Subsystem (504b) to make adaptation decisions,
association of a list of attributes (618) to each configuration by using the priorities from the aggregates,
assignment of an estimation about the resources needed to run the contained media items (614) to each configuration by using information from the media items (614).

**26.** A method according to anyone of the claims 24 to 25,
**characterized in that**
the Media Structure Subsystem (504a) uses different kinds of MediaStructureRobots (710):

at least one StructureOptimizer (710a), which is used to simplify the media structure whenever a distributed multimedia application (302) commits a media structure to the middleware framework system (304), or when the middleware framework system (304) changes the media structure,
at least one StructureVerifier (710b), which is applied to check whether the media structure has semantic inconsistencies, and invoked whenever a distributed multimedia application (302) commits a media structure to the middleware framework (304), or when the middleware framework (304) changes the media structure,
at least one AdmissionControlRobot (710c), which is employed to find the minimum and maximum resource requirements of a new media structure, and to decide whether the new media structure is accepted or rejected, and which is invoked whenever a distributed multimedia application (302) commits a media structure,
at least one ConfigurationListCreator (710d), which is applied to create a configuration list from the media structure given to the ConfigurationListManager (706) in order to make adaptation decisions, and invoked whenever the media structure has changed.

**27.** A method according to anyone of the claims 24 to 26,
**characterized in that**
the Media Structure Subsystem (504a) allows an addition and/or replacement of MediaStructureRobots (710).

**28.** A method according to anyone of the claims 24 to 27,
**characterized in that**
the ConfigurationListManipulators (708) is used as filters on the configuration lists, thereby performing one of the following tasks:

removing configurations whose resource requirements are beyond the capabilities of the applied distributed multimedia application (302),

executing user-defined rules by removing configurations which do not apply to these rules,

executing regulatory issues in exceptional cases by removing other configurations, removing configurations whose resource requirements exceed the capabilities of the applied distributed multimedia application (302),

checking the availability of the media items (614) and removing configurations where media items (614) are not accessible or not available, and

adding new configurations by using locally available converters or network services which manipulate multimedia streams.

**29.** A method according to anyone of the claims 24 to 28,
**characterized in that**
the ConfigurationListManipulators (708) is used to modify the configuration list to change the priorities or resource consumption estimations of configurations.

**30.** A method according to anyone of the claims 24 to 29,
**characterized in that**
the ConfigurationListManager (706) informs users of the configuration list via corresponding events if the configuration list has been modified.

**31.** A method according to anyone of the claims 24 to 30,
**characterized in that**
the MediaStructureManager (702) invokes the MediaStructureRobots (710) in a predefined order.

**32.** A method according to anyone of the claims 23 to 31,
**characterized in that** the Media Control Subsystem (504b) comprises:

at least one TriggerEventManager (908), which receives said events from the Media Management Subsystem (404), the Local Resource Management (804) and the Local Network Management (806), finds out the reason for problems indicated by said events, and provides a target in terms of the resource consumption for the Adaptation Engine (402) depending on that reason,

at least one DecisionEngine (904) triggered by the TriggerEventManager (908), which gets the actual configuration list from the Media Structure Subsystem (504a), maintains knowledge about the current active configuration, and selects a new configuration to switch to, and

at least one ConfigurationImplementor (906), which gets as input from the DecisionEngine (904) the new configuration, maintains information about the current configurations, and implements said new configuration.

**33.** A method according to anyone of the claims 22 to 32,
**characterized in that**
the TriggerEventManager (908) contains a logic to decide when an adaptation is necessary depending on the availability of resources and stability issues.

**34.** A method according to anyone of the claims 22 to 33,
**characterized in that**
after the implementation of an adaptation the TriggerEventManager (908) assures that there is a configurable period of time where no new adaptation can be performed, and where all incoming events are ignored.

**35.** A method according to anyone of the claims 22 to 34,
**characterized in that**
the TriggerEventManager (908) is able to make own measurements using the available bandwidth for a specific route, triggers the DecisionEngine (904) periodically or based on an heuristic model to switch to the configuration with the next higher resource consumption, or allows the user to specify when to adapt and to which configuration if the Media Management Subsystem (404), the Local Resource Management (804) and the Local Network Management (806) are only capable of sending events in case of problems.

**36.** A method according to anyone of the claims 22 to 35,
**characterized in that**
the DecisionEngine (904) allows a manual mode, in which different configurations and the information contained in the events are presented to the user who decides when to adapt and which configurations to use.

**37.** A method according to anyone of the claims 22 to 36,
**characterized in that**
the implementation of a new configuration by the ConfigurationImplementor (906) involves the following steps:

stopping all media items (614) that are a part of the current configuration but not part of the new configuration,
starting all media items (614) that are not part of the current configuration but part of the new configuration,
setting off the media configuration of the new media items (614) if they are controllable,
setting the media configurations of all controllable media items (614) that are part of the current and new configuration if they are different from the current media configuration.

**38.** A method according to anyone of the claims 23 to 37,
**characterized in that**
the ConfigurationImplementor (906) informs the corresponding distributed multimedia application (302) about started or stopped media items (614) by sending adaptation events to the respective distributed multimedia application (302) which - in case of a new media item (614) - also contain a reference to a media player object which can be used by the distributed multimedia application (302) to play said media item (614) and to control it.

**39.** A method according to anyone of the claims 22 to 38,
**characterized in that**
the ConfigurationImplementor (906) maintains a media controller for each distributed multimedia application (302) that allows the distributed multimedia application (302) to simultaneously control all continuous media items (614) belonging to it by adding new continuous media items (614) to the corresponding media controller, and removing stopped media items (614) from it.

**40.** A method according to anyone of the claims 22 to 39,
**characterized in that**
the ConfigurationImplementor (906) comprises a logic to use network reservation mechanisms if available.

**41.** A method according claim 40,
**characterized in that**
in case of a reservation failure the ConfigurationImplementor (906) sends a trigger event containing the reason for said failure to the TriggerEventManager (908), which then starts a new adaptation process with an adapted target.

**42.** A method according to anyone of the claims 23 to 41,
**characterized in that**
at least one adaptation context unit (912) stores and retrieves adaptation data,
at least one Graphical User Interface Manager (914) offers an Application Programming Interface for providing user interaction and monitoring the adaptation process.

**43.** A method according to anyone of the claims 22 to 42,
wherein
the adaptation to a varying resource availability is triggered by events that originate from the Media Structure Subsystem (504a), the Media Management Subsystem (404), the Local Resource Management (804) and the Local Network Management (806),
**characterized in that**
the Media Structure Subsystem (504a) sends events upon changes in the configuration list,
the Media Management Subsystem (404) periodically sends status events from running media items (614) which contain measured information of media and transmission parameters,
the Local Resource Management (804) notifies whether the overall CPU and/or memory consumption exceeds certain thresholds, or whether the battery is running low, and
the Local Network Management (806) sends events about the currently used access network or networks, and about the connections between access networks.

**44.** A method according to anyone of the claims 22 to 43,
wherein
a single Central Resource Controller (1002) is used by a set of client terminals (204) comprising TriggerEventManagers (908) for triggering an adaptation to varying resource availability and
at least one Media Structure Subsystem (504a) is running on each client terminal (204) for allowing the distributed multimedia applications (302) to define their media structure,
said method being **characterized in that**
the media structure is sent to the local Media Control Subsystem (504b) which in case of an adaptation is selecting the set of possible configurations based upon the resources managed by the device,
the local Media Control Subsystem (504b) also modifies the list of possible configurations,
the resulting configuration list is sent to the Central Re-source Controller (1002), the Central Resource Controller (1002) queries all other client terminals (204) for similar configuration lists and combines these into a global list of possible configurations by still maintaining the information about the original configurations, and
the Media Control Subsystem (504b) of the Central Resource Controller (1002) selects a configuration by taking the resource it is managing and the priority values of the con-figurations into account, looks up the original configurations that formed the selected configuration during aggregation, and informs the correspondent Configuration-Implementors (906) of the client terminals (204) about which configuration they have to implement.

45. A method according to anyone of the claims 22 to 43,
wherein
at least two Central Resource Controllers (1002) are used by a set of client terminals (204) comprising TriggerEvent-Managers (908) for triggering an adaptation to varying resource availability and
at least one Media Structure Subsystem (504a) is running on each client terminal (204) for allowing the distributed multimedia applications (302) to define their media structure,
said method being **characterized in that**
an hierarchy between the Central Resource Controllers (1002) is introduced, in which
the first Central Resource Controller (1002) in the hierarchy computes the global list of possible configurations and removes all configurations that are not possible owing to the availability of the locally managed resources,
the reduced list is passed to the next Central Resource Controller (1002) in the hierarchy which again removes the configurations not matching with its resource target,
the last Central Resource Controller (1002) in the hierarchy makes the final decision and informs the first Central Resource Controller (1002) which in turn informs the client terminals (204) about the configurations to implement,
and if the information about how the configurations were assem-bled from the device configurations is passed along with the configuration list, the last Central Resource Control-ler (1002) directly informs the client terminals (204).

46. A method according to claim 45,
**characterized in that**
the status information of the Adaptation Engine (402) on a first client terminal (204) comprising the media structure, the configuration list, the current configuration and for each continuous media item (614) the current media time can be transferred to a second client terminal (204).

47. A method according to claim 46,
**characterized in that**
the Adaptation Engine (402) on the second client terminal (204) restores the original status by using said status in-formation in order to perform an adaptation, as the second client terminal (204) may have different capabilities and a different resource availability than the first client terminal (204).

48. A client <u>terminal</u> connected to a client-server architecture of a distributed computing environment,
**characterized in that**
said client <u>terminal</u> (204) comprises a middleware framework system (304) according to anyone of the claims 1 to 21.

49. Use of a method according to anyone of the claims 22 to 47 in a multimedia document browser for running multimedia retrieval applications (200) on a client terminal (204).

**Patentansprüche**

1. Auf einem Client (204) implementiertes Middelware-Rahmenwerksystem, gerichtet auf Unterstützung verteilter Multimedienanwendungen (302) in heterogenen Kommunikationsnetzwerken zur dynamischen Anpassung an variierende verfügbare Ressourcen, umfassend:

- wenigstens ein Media Management Subsystem (Medienverwaltungs-Subsystem) (404) zur Verwaltung von Multimediadaten zum periodischen Senden von Statusereignissen von laufenden Medien-Items (media items) (614), die gemessene Information von Medien und Übertragungsparameter enthalten,
- wenigstens eine Adaptation Engine (Anpassungsmaschine) (402) zur Kontrolle bzw. Steuerung der Anpassung der verteilten Multimedienanwendungen (302) auf die laufende Ressourcenverfügbarkeit,

wobei die Adaptation Engine (402) umfasst:

- wenigstens einen Multimedia Application Manager (Multimedien-Anwendungsverwalter) (502), der zuständig ist für Anbieten des Application Programming Interface (Anwendungsprogrammierungsschnittstelle) der Adaptation Engine (402) den verteilten Multimedienanwendungen (302),
- wenigstens ein Media Structure Subsystem (Medienstruktur-Subsystem) (504a), das ausgebildet ist zum Gewinnen von Information von den Multimedienanwendungen (302) und zum Ansammeln dieser Information zu einer Liste möglicher Konfigurationen, und
- wenigstens ein Media Control Subsystem (Medienkontroll- bzw. -steuerungs-Subsystem) (504b), das ausgebildet ist zum Implementieren einer Kontroll- bzw. Steuerungsschleife, die eine Konfiguration auf Basis der laufenden Ressourcenverfügbarkeit dynamisch auswählt, um sie zu implementieren und die betroffenen verteilten Multimedienanwendungen (302) zu notifizieren,

wobei das Media Control Subsystem (404b) dem Media Structure Subsystem (504a), dem Media Management Subsystem (404), wenigstens einem Local Resource Management (Lokalressourcenverwaltung) (804) und wenigstens einem Local Network Management (Lokalnetzwerkverwaltung) (806) Schnittstellen (802b) definiert durch Benutzung von die erforderliche Funktionalität hinzufügenden Wrappers (Informationsextrahierer) (802a), **dadurch gekennzeichnet, dass** das Media Control Subsystem (504b) ausgebildet ist zum

- Verwalten aller ankommender Ereignisse, die vom Media Structure Subsystem (504a), Media Management Subsystem (404), Local Resource Management (804) und Local Network Management (806) stammen,
- Entscheiden, wann eine Anpassungssentscheidung zu treffen ist,
- Definieren des Ziels der Anpassung durch Spezifizieren der Grenze der lokalen Ressourcen, bei der bzw. denen eine neue Konfiguration benutzt werden darf,
- Auswählen einer neuen Konfiguration, und
- Implementieren der Entscheidung durch Stoppen von Medien-Items (604) die nicht Teil der neuen Konfiguration sind, Starten von Medien-Items (614), die Teil der neuen Konfiguration sind, Setzen der Medienkonfigurationen kontrollier- bzw. steuerbarer Medien-Items (614) und Senden von Ereignissen zu den betroffenen verteilten Multimedienanwendungen (302).

2. Middleware-Rahmenwerksystem nach Anspruch 1,
**dadurch gekennzeichnet, dass**
der Multimedia Application Manager (502) ausgebildet ist zum Verbinden der enthaltenen Subsysteme während des Beginnens (start-up) verteilter Multimedienanwendungen (302) und zum Rufen der korrespondierenden Verfahren zum Abkoppeln und Freigeben der anderen Subsysteme während der Beendigung (shut-down) der verteilten Multimedienanwendungen (302).

3. Middleware-Rahmenwerksystem nach einem der Ansprüche 1 oder 2,
**dadurch gekennzeichnet, dass**
das Media Structure Subsystem (504a) umfasst:

wenigstens eine MediaStructureFactory (Medienstrukturfabrik) (704), die ausgebildet ist zum Implementieren der Schnittstelle zum Konstruieren von Medienstrukturen, zum Übergeben (commit)von Medienstrukturen an das Middleware-Rahmenwerksystem (304), zum Entfernen von Medienstrukturen und zum dynamischen Ändern von Teilen der Medienstruktur,
wenigstens einen MediaStructureRobot (Medienstrukturroboter) (710), der ausgebildet ist zum Durchlaufen der Medienstruktur entweder zum Manipulieren der Struktur oder zum Wiedergewinnen von Information von der Struktur,
wenigstens einen ConfigurationListManager (Konfigurationslistenverwalter) (706), der ausgebildet ist zum Synchronisieren des Zugriffs zu der vom Media Control Subsystem (504b) gelesenen Konfigurationsliste und ausgebildet ist zum Hinzufügen von ConfigurationListManipulators (Konfigurationslistenmanipulatoren) (708), die ausgebildet sind zum Manipulieren der Konfigurationsliste, und

wenigstens einen MediaStructureManager (Medienstrukturverwalter) (702), der ausgebildet ist zum Erzeugen der MediaStructureFactories (704) und zum Kontrollieren bzw. Steuern der MediaStructureRobots (710) und des ConfigurationListManager (706).

4. Middleware-Rahmenwerksystem nach einem der Ansprüche 2 bis 3,
**dadurch gekennzeichnet, dass**
das Media Structure Subsystem (504a) ausgebildet ist zur Ausführung der folgenden Aktionen:

Verwaltung eines Medienstrukturbaums (600), bestehend aus Medienelementen und Medien-Items (614), beide mit assoziierten Attributen (618), die sich dynamisch ändern, wenn die verteilten Multimedienanwendungen (302)

Medienstrukturinformation hinzufügen oder entfernen, Berechnung einer differente Auswahlen, die aus der Auswertung der Medienstruktur resultieren, beschreibenden Liste von alternativen Konfigurationen, die vom Media Control Subsystem (504b) zum Treffen von Anpassungsentscheidungen benötigt wird,

Assoziation einer Liste von Attributen (618) zu jeder Konfiguration durch Benutzung der Prioritäten von den Ansammlungen,

Zuordnung einer Schätzung über die zum Laufen lassen der enthaltenen Medien-Items (614) benötigten Ressourcen zu jeder Konfiguration durch Benutzung von Information von den Medien-Items (614).

5. Middleware-Rahmenwerksystem nach einem der Ansprüche 3 bis 4,
**dadurch gekennzeichnet, dass**
das Media Structure Subsystem (504a) ausgebildet ist zum Benutzen unterschiedlicher Arten von MediaStructureRobots (710):

wenigstens eines StructureOptimizer (Strukturoptimierer) (710a), der benutzt wird zum Vereinfachen der Medienstruktur, immer wenn eine verteilte Multimedienanwendung (302) eine Medienstruktur zum Middleware-Rahmenwerksystem (304) übergibt oder wenn das Middleware-Rahmenwerksystem (304) die Medienstruktur ändert, wenigstens eines StructureVerifier (Strukturverifizierer) (710b), der angewendet wird zu Prüfen, ob die Medienstruktur semantische Inkonsistenzen aufweist, und aufgerufen bzw. aktiviert wird, immer wenn eine verteilte Multimedienanwendung (302) eine Medienstruktur zum Middleware-Rahmenwerksystem (304) übergibt oder wenn das Middleware-Rahmenwerksystem (304) die Medienstruktur ändert,

wenigstens eines AdmissionControlRobot (Zugangskontroll- bzw. -steuerungsroboter) (710c), der angewendet wird zum Finden der Minimum- und Maximumressourcenerfordernisse einer neuen Medienstruktur und zum Entscheiden, ob die neue Medienstruktur akzeptiert oder zurückgewiesen wird, und der aufgerufen bzw. aktiviert wird, immer wenn eine verteilte Multimedienanwendung (302) eine Medienstruktur übergibt,

wenigstens eines ConfigurationListCreator (Konfigurationslistenbildner) (710d), der angewendet wird zum Erzeugen einer Konfigurationsliste von der dem ConfigurationListManager (706) gegebenen Medienstruktur, um Anpassungsentscheidungen zu treffen, und aufgerufen bzw. aktiviert wird, immer wenn die Medienstruktur sich geändert hat.

6. Middleware-Rahmenwerksystem nach einem der Ansprüche 3 bis 5, **dadurch gekennzeichnet, dass**
das Media Structure Subsystem (504a) ausgebildet ist zum Erlauben einer Hinzufügung und/oder eines Ersatzes bzw. Austauschs von MediaStructureRobots (710).

7. Middleware-Rahmenwerksystem nach einem der Ansprüche 3 bis 6, **dadurch gekennzeichnet, dass**
die ConfigurationListManipulators (708) bei den Konfigurationslisten als Filter benutzt werden und dabei eine der folgenden Aufgaben ausführen:

Entfernen von Konfigurationen, deren Ressourcenerfordernisse außerhalb der Fähigkeiten der angewendeten verteilten Multimedienanwendung (302) sind,

Ausführen von benutzerdefinierten Regeln durch Entfernen von Konfigurationen, für die diese Regeln nicht gelten,

Ausführen von Regulierungsausgaben bzw. -vorschriften (regulatory issues) in Ausnahmefällen durch Entfernen anderer Konfigurationen,

Entfernen von Konfigurationen, deren Ressourcenerfordernisse die Fähigkeiten der angewendeten verteilten Multimedienanwendung (302) überschreiten,

Prüfen der Verfügbarkeit der Medien-Items (614) und Entfernen von Konfigurationen, bei denen Medien-Items (614) nicht zugänglich oder nicht verfügbar sind, und

Hinzufügen neuer Konfigurationen durch Benutzung lokal verfügbarer Konverter oder Netzwerkdienste, die Multimedienströme manipulieren.

8. Middleware-Rahmenwerksystem nach einem der Ansprüche 3 bis 7,
**dadurch gekennzeichnet, dass** die ConfigurationListManipulators (708) benutzt werden zum Modifizieren der Konfigurationsliste zum Ändern der Prioritäten oder Ressourcenverbrauchsschätzungen von Konfigurationen.

9. Middleware-Rahmenwerksystem nach einem der Ansprüche 3 bis 8,
**dadurch gekennzeichnet, dass**
der ConfigurationListManager (706) Benutzer der Konfigurationsliste über korrespondierende Ereignisse informiert, wenn die Konfigurationsliste modifiziert worden ist.

10. Middleware-Rahmenwerksystem nach einem der Ansprüche 3 bis 9,
**dadurch gekennzeichnet, dass**
der MediaStructureManager (702) die MediaStructureRobots (710) in einer vordefinierten Ordnung aufruft bzw. aktiviert.

11. Middleware-Rahmenwerksystem nach einem der Ansprüche 2 bis 10,
**dadurch gekennzeichnet, dass** das Media Control Subsystem (504b) umfasst: wenigstens einen TriggerEvent-Manager (Triggerereignisverwalter) (908), der die Ereignisse vom Media Management Subsystem (404), Local Resource Management (804) und Local Network Management (806) empfängt, den Grund für Probleme, die von den Ereignissen angezeigt werden, herausfindet und ein Ziel in Form des Ressourcenverbrauchs für die Adaptation Engine (402) abhängig von diesem Grund bereitstellt,
wenigstens eine vom TriggerEventManager (908) getriggerte DecisionEngine (Entscheidungsmaschine) (904), welche die tatsächliche Konfigurationsliste vom Media Structure Subsystem (504a) bekommt, Kenntnis über die laufende aktive Konfiguration beibehält und eine neue Konfiguration, zu der zu schalten ist, auswählt, und
wenigstens einen ConfigurationImplementor (Konfigurationsimplementator bzw. - ausführer) (906), der als Eingabe von der DecisionEngine (904) die neue Konfiguration bekommt, Information über die laufenden Konfigurationen beibehält und die neue Konfiguration implementiert.

12. Middleware-Rahmenwerksystem nach einem der Ansprüche 1 bis 11,
**dadurch gekennzeichnet, dass**
der TriggerEventManager (908) eine Logik zum Entscheiden, wann abhängig von der Verfügbarkeit von Ressourcen und Stabilitätsausgaben bzw. -vorschriften eine Anpassung notwendig ist, enthält.

13. Middleware-Rahmenwerksystem nach einem der Ansprüche 1 bis 12,
**dadurch gekennzeichnet, dass**
nach der Implementation einer Anpassung der TriggerEventManager (908) sicherstellt, dass es eine konfigurierbare Zeitperiode gibt, bei der keine neue Anpassung ausgeführt werden kann und bei der alle ankommenden Ereignisse ignoriert werden.

14. Middleware-Rahmenwerksystem nach einem der Ansprüche 1 bis 13,
**dadurch gekennzeichnet, dass**
der TriggerEventManager (908) fähig ist, eigene Messungen unter Benutzung der verfügbaren Bandbreite für eine spezifische Route auszuführen, die DecisionEngine (904) periodisch oder auf Basis eines heuristischen Modells zum Schalten zur Konfiguration mit dem nächst höheren Ressourcenverbrauch triggert oder dem Benutzer zu spezifizieren erlaubt, wann anzupassen ist und an welche Konfiguration, wenn das Media Management Subsystem (404), das Local Resource Management (804) und das Local Network Management (806) nur fähig sind, Ereignisse im Fall von Problemen zu senden.

15. Middleware-Rahmenwerksystem nach einem der Ansprüche 1 bis 14,
**dadurch gekennzeichnet, dass**
die DecisionEngine (904) ausgebildet ist zum Erlauben eines manuellen Modus, in welchem unterschiedliche Konfigurationen und die in den Ereignissen enthaltene Information dem Benutzer präsentiert werden, der entscheidet, wann anzupassen ist und welche Konfigurationen zu benutzen sind.

**16.** Middleware-Rahmenwerksystem nach einem der Ansprüche 1 bis 15,
**dadurch gekennzeichnet, dass**
die Implementation einer neuen Konfiguration durch den ConfigurationImplementor (906) die folgenden Schritte involviert:

Stoppen aller Medien-Items (614), die Teil der laufenden Konfiguration, aber nicht Teil der neuen Konfiguration sind,
Starten aller Medien-Items (614), die nicht Teil der laufenden Konfiguration, aber Teil der neuen Konfiguration sind,
Absetzen bzw. Hervorheben (set off) der Medienkonfiguration der neuen Medien-Items (614), wenn sie kontrollier- bzw. steuerbar sind,
Setzen der Medienkonfigurationen aller kontrollier- bzw. steuerbaren Medien-Items (614), die Teil der laufenden Konfiguration sind, wenn sie von den laufenden Medienkonfigurationen different sind.

**17.** Middleware-Rahmenwerksystem nach einem der Ansprüche 2 bis 16,
**dadurch gekennzeichnet, dass**
der ConfigurationImplementor (906) die korrespondierende verteilte Multimedienanwendung (302) über gestartete oder gestoppte Medien-Items (614) informiert durch Senden von Anpassungsereignissen zur jeweiligen verteilten Multimedienanwendung (302), die - im Fall eines neuen Medien-Item (614) - auch eine Referenz zu einem Medienspielerobjekt enthält, das von der verteilten Multimedienanwendung (302) zum Spielen des Medien-Item (614) und um es zu kontrollieren bzw. steuern benutzt werden kann.

**18.** Middleware-Rahmenwerksystem nach einem der Ansprüche 1 bis 17,
**dadurch gekennzeichnet, dass**
der ConfigurationImplementor (906) für jede verteilte Multimedienanwendung (302) einen Medienkontroller beibehält, welcher der verteilten Multimedienanwendung (302) erlaubt, alle kontinuierlichen Medien-Items (614), die zu ihr gehören, durch Hinzufügen neuer kontinuierlicher Medien-Items (614) zum korrespondierenden Medienkontroller und Entfernen gestoppter Medien-Items (614) von ihr simultan zu kontrollieren bzw. steuern.

**19.** Middleware-Rahmenwerksystem nach einem der Ansprüche 1 bis 18,
**dadurch gekennzeichnet, dass**
der ConfigurationImplementor (906) eine Logik zum Benutzen von Netzwerkreservierungsmechanismen, wenn verfügbar, umfasst.

**20.** Middleware-Rahmenwerksystem nach Anspruch 19,
**dadurch gekennzeichnet, dass**
im Fall eines Reservierungsausfalls der ConfigurationImplementor (906) ein den Grund für den Ausfall enthaltendes Triggerereignis zum TriggerEventManager (908) sendet, der dann einen neuen Anpassungsprozess mit einem angepassten Ziel startet.

**21.** Middleware-Rahmenwerksystem nach einem der Ansprüche 2 bis 20,
**dadurch gekennzeichnet, dass**
die Adaptation Engine (402) zusätzlich umfasst:

wenigstens eine Anpassungskontexteinheit (adaptation context unit) (912), die zum Speichern und Wiedergewinnen von Anpassungsdaten benutzt wird,
wenigstens einen Graphical User Interface Manager
(Grafikbenutzerschnittstellenverwalter) (914), der ein Application Programming Interface (Anwendungsprogrammierungsschnittstelle) zur Bereitstellung einer Benutzerinteraktion und Überwachung des Anpassungsprozesses anbietet.

**22.** Auf einem Client (204) implementiertes Verfahren, gerichtet auf Unterstützung verteilter Multimedienanwendungen (302) in heterogenen Kommunikationsnetzwerken zur dynamischen Anpassung an variierende Ressourcenverfügbarkeit, wobei:

- wenigstens ein Media Management Subsystem (Medienverwaltungs-Subsystem) (404) Multimediendaten verwaltet zum periodischen Senden von Statusereignissen von laufenden Medien-Items (614), die gemessene Information von Medien und Übertragungsparameter enthalten,

- wenigstens eine Adaptation Engine (Anpassungsmaschine)(402) die Anpassung der verteilten Multimedienanwendungen (302) an die laufende Ressourcenverfügbarkeit kontrolliert bzw. steuert,

wobei:

- wenigstens ein Multimedia Application Manager (Multimedien-Anwendungsverwalter) (502), der in der Adaptation Engine (402) vorhanden ist, die Anwendungsprogrammierungsschnittstelle der Adaptation Engine (402) den verteilten Multimedienanwendungen (302) anbietet,
- wenigstens ein Media Structure Subsystem (Medienstruktur-Subsystem) (504a), das in der Adaptation Engine (402) vorhanden ist, Information von den verteilten Multimedienanwendungen (302) bekommt und diese Information zu einer Liste möglicher Konfigurationen ansammelt, und
- wenigstens ein Media Control Subsystem (Medienkontroll- bzw. -steuerungs-Subsystem) (504b), das in der Adaptation Engine (402) vorhanden ist, eine Kontroll- bzw. Steuerungsschleife implementiert, die eine Konfiguration auf Basis der laufenden Ressourcenverfügbarkeit dynamisch auswählt, sie implementiert und die betroffenen verteilten Multimedienanwendungen (302) notifiziert,

wobei das Media Control Subsystem (504b) Schnittstellen (802b) zum Media Structure Subsystem (504a), Media Management Subsystem (404), zu wenigstens einem Local Resource Management (Lokalressourcenverwaltung) (804) und wenigstens einem Local Network Management (Lokalnetzwerkverwaltung) (806) definiert durch Benutzung von die erforderliche Funktionalität hinzufügenden Wrappers (Informationsextrahierer) (802a),
**dadurch gekennzeichnet, dass**
das Media Control Subsystem (504b) die folgenden Schritte ausführt:

- Verwalten aller ankommenden Ereignisse, die vom Media Structure Subsystem (504a), Media Management Subsystem (404), Local Resource Management (804) und Local Network Management (806) stammen,
- Entscheiden, wann die Anpassungsentscheidung zu treffen ist,
- Definieren des Ziels der Anpassung durch Spezifizieren der Grenze der lokalen Ressourcen, bei der bzw. denen eine neue Konfiguration benutzt werden darf,
- Auswählen einer neuen Konfiguration, und
- Implementieren der Entscheidung durch Stoppen von Medien-Items (614), die nicht Teil der neuen Konfiguration sind, Starten von Medien-Items (614), die Teil der neuen Konfiguration sind, Setzen der Medienkonfigurationen kontrollier- bzw. steuerbarer Medien-Items (614), und Senden von Ereignissen zu den betroffenen verteilten Multimedienanwendungen (302).

23. Verfahren nach Anspruch 22,
**dadurch gekennzeichnet, dass**
der Multimedia Application Manager (502) die enthaltenen Subsysteme während des Beginnens (start- up) verteilter Multimedienanwendungen (302) verbindet und die korrespondierenden Verfahren zum Abkoppeln und Freigeben der anderen Subsysteme während der Beendigung (shut-down) der verteilten Multimedienanwendungen (302) ruft.

24. Verfahren nach einem der Ansprüche 22 oder 23,
**dadurch gekennzeichnet, dass**
wenigstens eine MediaStructureFactory (Medienstrukturfabrik) (704), die im Media Structure Subsystem (504a) vorhanden ist, die Schnittstelle zum Konstruieren von Medienstrukturen implementiert, Medienstrukturen an das Middleware-Rahmenwerksystem (304) übergibt (commit), Medienstrukturen entfernt und Teile der Medienstrukturen dynamisch ändert,
wenigstens ein MediaStructureRobot (Medienstrukturroboter) (710), der im Media Structure Subsystem (504a) vorhanden ist, die Medienstruktur entweder zum Manipulieren der Struktur oder zum Wiedergewinnen von Information von der Struktur durchläuft,
wenigstens ein ConfigurationListManager (Konfigurationslistenverwalter) (706), der im Media Structure Subsystem (504a) vorhanden ist, den Zugang zu der vom Media Control Subsystem (504b) gelesenen Konfigurationsliste synchronisiert und ConfigurationListManipulators (Konfigurationslistenmanipulatoren) (708) hinzufügt, die ausgebildet sind zum Manipulieren der Konfigurationsliste, und wenigstens ein MediaStructureManager (Medienstrukturverwalter) (702), der im Media Structure Subsystem (504a) vorhanden ist, die MediaStructureFactories (704) erzeugt und die MediaStructureRobots (710) und den ConfigurationListManager (706) kontrolliert bzw. steuert.

25. Verfahren nach einem der Ansprüche 23 bis 24,
**dadurch gekennzeichnet, dass**

das Media Structure Subsystem (504a) die folgenden Aktionen ausführt:

Verwaltung eines Medienstrukturbaums (600), bestehend aus Medien-Items (614), beide mit assoziierten Attributen (618), die sich dynamisch ändern, wenn die verteilten Multimedienanwendungen (302) Medienstrukturinformation hinzufügen oder entfernen,
Berechnung einer differente Auswahlen, die aus der Auswertung der Medienstruktur resultieren, beschreibenden Liste von alternativen Konfigurationen, die vom Media Control Subsystem (504b) benötigt wird, um Anpassungsentscheidungen zu treffen, Assoziation einer Liste von Attributen (618) zu jeder Konfiguration durch Benutzung der Prioritäten von den Ansammlungen,
Zuordnung einer Schätzung über die zum Laufen lassen der enthaltenen Medien-Items (614) benötigten Ressourcen zu jeder Konfiguration durch Benutzung von Information von den Medien-Items (614).

26. Verfahren nach einem der Ansprüche 24 bis 25,
**dadurch gekennzeichnet, dass**
das Media Structure Subsystem (504a) unterschiedliche Arten von MediaStructureRobots (710) benutzt:

wenigstens einen StructureOptimizer (Strukturoptimierer) (710a), der benutzt wird zum Vereinfachen der Medienstruktur, immer wenn eine verteilte Multimedienanwendung (302) eine Medienstruktur zum Middleware-Rahmenwerksystem (304) übergibt oder wenn das Middleware-Rahmenwerksystem (304) die Medienstruktur ändert,
wenigstens einen StructureVerifier (Strukturverifizierer) (710b), der angewendet wird zum Prüfen, ob die Medienstruktur semantische Inkonsistenzen aufweist und aufgerufen bzw. aktiviert wird, immer wenn eine verteilte Multimedienanwendung (302) eine Medienstruktur zum Middleware-Rahmenwerk (304) übergibt oder wenn das Middleware-Rahmenwerk (304) die Medienstruktur ändert,
wenigsten einen AdmissionControlRobot (Zugangskontroll- bzw. -steuerungsroboter) (710c), der angewendet wird zum Finden der Minimum- und
Maximumressourcenerfordernisse einer neuen Medienstruktur und zum Entscheiden, ob die neue Medienstruktur akzeptiert oder zurückgewiesen wird, und der aufgerufen bzw. aktiviert wird, immer wenn eine verteilte Multimedienanwendung (302) eine Medienstruktur übergibt,
wenigstens einen ConfigurationListCreator (Konfigurationslistenbildner) (710d), der angewendet wird zum Erzeugen einer Konfigurationsliste von der dem Konfigurationslistenverwalter gegebenen Medienstruktur, um Adaptationsentscheidungen zu treffen, und aufgerufen bzw. aktiviert wird, immer wenn die Medienstruktur sich geändert hat.

27. Verfahren nach einem der Ansprüche 24 bis 26,
**dadurch gekennzeichnet, dass**
das Media Structure Subsystem (504a) eine Hinzufügung und/oder einen Ersatz bzw. Austausch von MediaStructureRobots (710) erlaubt.

28. Verfahren nach einem der Ansprüche 24 bis 27,
**dadurch gekennzeichnet, dass**
die ConfigurationListManipulators (708) bei den Konfigurationslisten als Filter benutzt werden und dabei eine der folgenden Aufgaben ausführen:

Entfernen von Konfigurationen, deren Ressourcenerfordernisse außerhalb der Fähigkeiten der angewendeten verteilten Multimedienanwendung (302) sind, Ausführen von benutzerdefinierten Regeln durch Entfernen von Konfigurationen, für die diese Regeln nicht gelten,
Ausführen von Regulierungsausgaben bzw. -vorschriften (regulatory issues) in Ausnahmefällen durch Entfernen anderer Konfigurationen,
Entfernen von Konfigurationen, deren Ressourcenerfordernisse die Fähigkeiten der angewendeten verteilten Multimedienanwendung (302) überschreiten,
Prüfen der Verfügbarkeit der Medien-Items (614) und Entfernen von Konfigurationen, bei denen Medien-Items (614) nicht zugänglich oder nicht verfügbar sind, und Hinzufügen neuer Konfigurationen durch Benutzung lokal verfügbarer Konverter oder Netzwerkdienste, die Multimedienströme manipulieren.

29. Verfahren nach einem der Ansprüche 24 bis 28,
**dadurch gekennzeichnet, dass**
die ConfigurationListManipulators (708) benutzt werden zum Modifizieren der Konfigurationsliste zum Ändern der Prioritäten oder Ressourcenverbrauchsschätzungen von Konfigurationen.

30. Verfahren nach einem der Ansprüche 24 bis 29,
**dadurch gekennzeichnet, dass**
der ConfigurationListManager (706) Benutzer der Konfigurationsliste über korrespondierende Ereignisse informiert, wenn die Konfigurationsliste modifiziert worden ist.

31. Verfahren nach einem der Ansprüche 24 bis 30,
**dadurch gekennzeichnet, dass**
der MediaStructureManager (702) die MediaStructureRobots (710) in einer vordefinierten Ordnung aufruft bzw. aktiviert.

32. Verfahren nach einem der Ansprüche 23 bis 31,
**dadurch gekennzeichnet, dass** das Media Control Subsystem (504b) umfasst: wenigstens einen TriggerEvent-Manager (Triggerereignisverwalter) (908), der die Ereignisse vom Media Management Subsystem (404), Local Resource Management (804) und Local Network Management (806) empfängt, den Grund für Probleme, die von den Ereignissen angezeigt werden, herausfindet und ein Ziel in Form des Ressourcenverbrauchs für die Adaptation Engine (402) abhängig von diesem Grund bereitstellt,
wenigstens eine vom TriggerEventManager (908) getriggerte DecisionEngine (Entscheidungsmaschine) (904), welche die tatsächliche Konfigurationsliste vom Media Structure Subsystem (504a) bekommt, Kenntnis über die laufende aktive Konfiguration beibehält und eine neue Konfiguration, zu der zu schalten ist, auswählt, und
wenigstens einen ConfigurationImplementor (Konfigurationsimplementator bzw. - ausführer) (906), der als Eingabe von der DecisionEngine (904) die neue Konfiguration bekommt, Information über die laufende Konfigurationen beibehält und die neue Konfiguration implementiert.

33. Verfahren nach einem der Ansprüche 22 bis 32,
**dadurch gekennzeichnet, dass**
der TriggerEventManager (908) eine Logik zum Entscheiden, wann abhängig von der Verfügbarkeit von Ressourcen und Stabilitätsausgaben bzw. -vorschriften eine Anpassung notwendig ist, enthält.

34. Verfahren nach einem der Ansprüche 22 bis 33,
**dadurch gekennzeichnet, dass**
nach der Implementation einer Anpassung der TriggerEventManager (908) sicherstellt, dass es eine konfigurierbare Zeitperiode gibt, bei der keine neue Anpassung ausgeführt werden kann und bei der alle ankommenden Ereignisse ignoriert werden.

35. Verfahren nach einem der Ansprüche 22 bis 34,
**dadurch gekennzeichnet, dass**
der TriggerEventManager (908) fähig ist, eigene Messungen unter Benutzung der verfügbaren Bandbreite für eine spezifische Route auszuführen, die DecisionEngine (904) periodisch auf Basis eines heuristischen Modells zum Schalten zur Konfiguration mit dem nächst höheren Ressourcenverbrauch triggert oder dem Benutzer zu spezifizieren erlaubt, wann anzupassen ist und an welche Konfiguration, wenn das Media Management Subsystem (404), das Local Resource Management (804) und das Local Network Management (806) nur fähig sind, Ereignisse im Fall von Problemen zu senden.

36. Verfahren nach einem der Ansprüche 22 bis 35,
**dadurch gekennzeichnet, dass**
die DecisionEngine (904) einen manuellen Modus erlaubt, in welchem unterschiedliche Konfigurationen und die in den Ereignissen enthaltene Information dem Benutzer präsentiert werden, der entscheidet, wann anzupassen ist und welche Konfigurationen zu benutzen sind

37. Verfahren nach einem der Ansprüche 22 bis 36,
**dadurch gekennzeichnet, dass**
die Implementation einer neuen Konfiguration durch den ConfigurationImplementor (906) die folgenden Schritte involviert:

Stoppen aller Medien-Items (614), die ein Teil der laufenden Konfiguration, aber nicht Teil der neuen Konfiguration sind,

Starten aller Medien-Items (614), die nicht Teil der laufenden Konfiguration, aber Teil der neuen Konfiguration sind,

Absetzen bzw. Hervorheben (set off) der Medienkonfiguration der neuen Medien-Items (614), wenn sie kontrollier- bzw. steuerbar sind,

Setzen der Medienkonfigurationen aller kontrollier- bzw. steuerbaren Medien-Items (614), die Teil der laufenden und neuen Konfiguration sind, wenn sie von der laufenden Medienkonfiguration different sind.

**38.** Verfahren nach einem der Ansprüche 23 bis 37,
**dadurch gekennzeichnet, dass**
der ConfigurationImplementor (906) die korrespondierende verteilte Multimedienanwendung (302) über gestartete oder gestoppte Medien-Items (614) informiert durch Senden von Anpassungsereignissen zur jeweiligen verteilten Multimedienanwendung (302), die - im Fall eines neuen Medien-Item (614) - auch eine Referenz zu einem Medienspielerobjekt enthält, das von der verteilten Multimedienanwendung (302) zum Spielen des Medien-Item (614) und um es zu kontrollieren bzw. steuern benutzt werden kann.

**39.** Verfahren nach einem der Ansprüche 22 bis 38,
**dadurch gekennzeichnet, dass**
der ConfigurationImplementor (906) einen Medienkontroller für jede verteilte Multimedienanwendung (302) beibehält, welcher der verteilten Multimedienanwendung (302) erlaubt, alle kontinuierlichen Medien-Items (614), die zu ihr gehören, durch Hinzufügen neuer kontinuierlicher Medien-Items (614) zum korrespondierenden Medienkontroller simultan zu kontrollieren bzw. steuern und gestoppte Medien-Items (614) von ihr zu entfernen.

**40.** Verfahren nach einem der Ansprüche 22 bis 39,
**dadurch gekennzeichnet, dass**
der ConfigurationImplementor (906) eine Logik zur Benutzung von Netzwerkreservierungsmechanismen, wenn verfügbar, umfasst.

**41.** Verfahren nach Anspruch 40,
**dadurch gekennzeichnet, dass**
im Fall eines Reservierungsausfalls der ConfigurationImplementor (906) ein den Grund für den Ausfall enthaltendes Triggerereignis zum TriggerEventManager (908) sendet, der dann einen neuen Anpassungsprozess mit einem angepassten Ziel startet.

**42.** Verfahren nach einem der Ansprüche 23 bis 41,
**dadurch gekennzeichnet, dass**
wenigstens eine Anpassungskontexteinheit (adaptation context unit) (912) Anpassungsdaten speichert und wiedergewinnt,
wenigstens ein Graphical User Interface Manager
(Grafikbenutzerschnittstellenverwalter) (914) ein Application Programming Interface (Anwendungsprogrammierungsschnittstelle) zum Bereitstellen einer Benutzerinteraktion und Überwachen des Anpassungsprozesses anbietet.

**43.** Verfahren nach einem der Ansprüche 22 bis 42,
wobei
die Anpassung an eine variierende Ressourcenverfügbarkeit durch Ereignisse getriggert wird, die vom Media Structure Subsystem (504a), Media Management Subsystem (404), Local Resource Management (804) und/oder Local Network Management (806) stammen,
**dadurch gekennzeichnet, dass**
das Media Structure Subsystem (504a) Ereignisse über Änderungen in der Konfigurationsliste sendet,
das Media Management Subsystem (404) periodisch Statusereignisse von laufenden Medien-Items (614) sendet, die gemessene Information von Medien und Übertragungsparameter enthalten,
das Local Resource Management (804) notifiziert, ob der gesamte CPU- und/oder Speicherverbrauch gewisse Schwellen überschreitet oder ob die Batterie knapp wird, und
das Local Network Management (806) Ereignisse über das oder die laufend benutzten Zugriffsnetzwerke und über die Verbindung zwischen Zugriffsnetzwerken sendet.

**44.** Verfahren nach einem der Ansprüche 22 bis 43,
wobei

ein einzelner Central Resource Controller (Zentralressourcenkontroller) (1002) durch einen Satz von Client-Endgeräten (204), die TriggerEventManagers (908) zum Triggern einer Anpassung an variierende Ressourcenverfügbarkeit umfassen, benutzt wird und

wenigstens ein Media Structure Subsystem (504a) auf jedem Client-Endgerät (204) läuft, um den verteilten Multimedienanwendungen (302) zu erlauben, ihre Medienstruktur zu definieren, wobei

das Verfahren **dadurch gekennzeichnet ist, dass**

die Medienstruktur zum lokalen Media Control Subsystem (504b) gesendet wird, das im Fall einer Anpassung den Satz möglicher Konfigurationen auf Basis der von der Einrichtung verwalteten Ressourcen auswählt,

das lokale Media Control Subsystem (504b) auch die Liste möglicher Konfigurationen modifiziert,

die resultierende Konfigurationsliste zum Central Resource Controller (1002) gesendet wird,

der Central Resource Controller (1002) alle anderen Client-Endgeräte (204) nach ähnlichen Konfigurationslisten abfrägt und diese in eine globale Liste möglicher Konfigurationen durch auch Beibehalten der Information über die originalen Konfigurationen kombiniert, und

das Media Control Subsystem (504b) des Central Resource Controller (1002) eine Konfiguration durch Berücksichtigung der Ressource, die er verwaltet, und der Prioritätswerte der Konfigurationen auswählt, die originalen Konfigurationen, welche die ausgewählten Konfigurationen während einer Ansammlungen bildeten, nachschlägt und die korrespondierenden ConfigurationImplementors (906) der Client-Endgeräte (204) darüber informiert, welche Konfiguration sie zu implementieren haben.

**45.** Verfahren nach einem der Ansprüche 22 bis 43,
wobei
wenigsten zwei Central Resource Controllers (1002) von einem Satz von Client-Endgeräten (204), die TriggerEventManagers (908) zum Triggern einer Anpassung an variierende Ressourcenverfügbarkeit umfassen, benutzt werden, und wenigstens ein Media Structure Subsystem (504a) auf jedem Clientendgerät (204) läuft, um den verteilten Multimedienanwendungen (302) zu erlauben, ihre Medienstruktur zu definieren, wobei
das Verfahren **dadurch gekennzeichnet ist dass**,
eine Hierarchie zwischen den Central Resource Controllers (1002) eingebracht wird, in welcher
der erste Central Resource Controller (1002) die globale Liste möglicher Konfigurationen berechnet und alle Konfigurationen, die wegen der Verfügbarkeit der lokal verwalteten Ressourcen nicht möglich sind, entfernt,
die reduzierte Liste zum nächsten Central Resource Controller (1002) in der Hierarchie weitergegeben wird, der wieder die Konfigurationen, die nicht zu dem Ressourcenziel passen, entfernt,
der letzte Central Resource Controller (1002) in der Hierarchie die letzte Entscheidung trifft und den ersten Central Resource Controller (1002) informiert, der wiederum die Client-Endgeräte (204) über die zu implementierenden Konfigurationen informiert, und
wenn die Information darüber, wie die Konfigurationen von den Einrichtungskonfigurationen zusammengesetzt wurden, zusammen mit der Konfigurationsliste weitergegeben wird, der letzte Central Resource Controller (1002) die Client-Endgeräte (204) direkt informiert.

**46.** Verfahren nach Anspruch 45,
**dadurch gekennzeichnet, dass**
die Statusinformation der Adaptation Engine (402) auf einem ersten Client-Endgerät (204), welche die Medienstruktur, die Konfigurationsliste, die laufende Konfiguration und für jedes kontinuierliche Medien-Item (614) die laufende Medienzeit umfasst, zu einem zweiten Client-Endgerät (204) transferiert werden kann.

**47.** Verfahren nach Anspruch 46,
**dadurch gekennzeichnet, dass**
die Adaptation Engine (402) auf dem zweiten Client-Endgerät (204) den originalen Status durch Benutzung der Statusinformation wiederherstellt, um eine Anpassung auszuführen, wenn das zweite Client-Endgerät (204) andere Fähigkeiten und eine andere Ressourcenverfügbarkeit als das erste Client-Endgerät (204) aufweisen kann.

**48.** Client-Endgerät, verbunden mit einer Clientserverarchitektur einer verteilten Informationsverarbeitungsumgebung (distributed computing environment),
**dadurch gekennzeichnet, dass**
das Client-Endgerät (204) ein Middleware-Rahmenwerksystem (304) nach einem der Ansprüche 1 bis 21 aufweist.

**49.** Benutzung eines Verfahrens nach einem der Ansprüche 22 bis 47 in einem Multimediendokumentenbrowser zum Laufen lassen von Multimedienwiedergewinnungsanwendungen (200) auf einem Client-Endgerät (204).

**Revendications**

1. Système d'architecture de logiciel intermédiaire mis en oeuvre sur un dispositif client (204) ciblé pour prendre en charge des applications multimédia distribuées (302) dans des réseaux de communication hétérogènes en vue d'une adaptation dynamique à une disponibilité de ressources variable, comportant :

   - au moins un sous-système de gestion multimédia (404) pour gérer des données multimédia en vue d'envoyer périodiquement des événements d'état en provenance d'articles multimédia fonctionnels (614), lesquels contiennent des informations mesurées de paramètres de transmission et paramètres multimédia ;
   - au moins un moteur d'adaptation (402) pour commander l'adaptation desdites applications multimédia distribuées (302) à la disponibilité de ressources en cours ;

   dans lequel le moteur d'adaptation (402) comporte :

   - au moins un gestionnaire d'applications multimédia (502), lequel a la charge de proposer l'interface de programmation d'applications du moteur d'adaptation (402) aux applications multimédia distribuées (302) ;
   - au moins un sous-système de structure multimédia (504a), lequel est apte à obtenir des informations en provenance des applications multimédia distribuées (302), et à agréger ces informations à une liste de configurations potentielles ; et
   - au moins un sous-système de commande multimédia (504b) lequel est apte à mettre en oeuvre une boucle de régulation laquelle sélectionne dynamiquement une configuration sur la base de la disponibilité de ressources en cours, à la mettre en oeuvre et à avertir les applications multimédia distribuées affectées (302) ;

   dans lequel le sous-système de commande multimédia (504b) définit des interfaces (802b) au sous-système de structure multimédia (504a), au sous-système de gestion multimédia (404), au moins une solution de gestion de ressources locales (804) et au moins une solution de gestion de réseau local (806) en faisant appel à des enveloppeurs (802a) ajoutant la fonctionnalité requise,
   **caractérisé en ce que**
   le sous-système de commande multimédia (504b) est apte à

   - gérer la totalité des événements entrants en provenance du sous-système de structure multimédia (504a), du sous-système de gestion multimédia (404), de la solution de gestion de ressources locales (804) et de la solution de gestion de réseau local (806) ;
   - déterminer à quel moment une décision d'adaptation doit être prise ;
   - définir la cible de l'adaptation en spécifiant la limite des ressources locales qu'une nouvelle configuration est autorisée à utiliser ;
   - sélectionner une nouvelle configuration ; et
   - mettre en oeuvre la décision en arrêtant des articles multimédia (614) qui ne font pas partie de la nouvelle configuration, en initiant des articles multimédia (614) qui font pas partie de la nouvelle configuration, en définissant les configurations multimédia d'articles multimédia pouvant être commandés (614), et en envoyant des événements aux applications multimédia distribuées affectées (302).

2. Système d'architecture de logiciel intermédiaire selon la revendication 1,
   **caractérisé en ce que**
   ledit gestionnaire d'applications multimédia (502) est apte à connecter les sous-systèmes contenus au cours du démarrage d'applications multimédia distribuées (302), et à appeler les procédés correspondant en vue de découpler et de dés-affecter les autres sous-systèmes au cours de la mise hors tension desdites applications multimédia distribuées (302).

3. Système d'architecture de logiciel intermédiaire selon l'une quelconque des revendications 1 et 2,
   **caractérisé en ce que**
   le sous-système de structure multimédia (504a) comporte :

   au moins une installation de structures multimédia « MediaStructureFactory » (704), laquelle est apte à mettre en oeuvre l'interface en vue de construire des structures multimédia, à regrouper des structures multimédia au système d'architecture de logiciel intermédiaire (304), à supprimer des structures multimédia, et à modifier dynamiquement des parties de la structure multimédia ;
   au moins un robot de structure multimédia « MediaStructureRobot » (710), lequel est apte à franchir la structure multimédia pour soit manipuler la structure, soit récupérer des informations à partir de la structure,

au moins un gestionnaire de liste de configurations « ConfigurationListManager » (706), lequel est apte à synchroniser l'accès à la liste de configurations lue à partir du sous-système de commande multimédia (504b), et apte à ajouter des manipulateurs de listes de configurations « ConfigurationListManipulators » (708) lesquels sont aptes à manipuler la liste de configurations, et

au moins un gestionnaire de structure multimédia « MediaStructureManager » (702), lequel est apte à créer les installations de structures multimédia « MediaStructureFactories » (704) et à commander les robots de structure multimédia « MediaStructureRobots » (710) et le gestionnaire de liste de configurations « ConfigurationListManager » (706).

**4.** Système d'architecture de logiciel intermédiaire selon l'une quelconque des revendications 2 à 3,
**caractérisé en ce que**
le sous-système de structure multimédia (504a) est apte à mettre en oeuvre les étapes ci-dessous de :

gestion d'une arborescence de structures multimédia (600) comportant des éléments multimédia et articles multimédia (614) disposant tous deux d'attributs associés (618), lesquels évoluent dynamiquement à mesure que les applications multimédia distribuées (302) ajoutent ou suppriment des informations de structure multimédia ;

calcul d'une liste de configurations alternatives décrivant différents choix qui résultent de l'évaluation de la structure multimédia, laquelle est requise par le sous-système de commande multimédia (504b) en vue de prendre des décisions d'adaptation ;

association d'une liste d'attributs (618) à chaque configuration en faisant appel aux propriétés des agrégats ;

affectation d'une estimation concernant les ressources requises pour exploiter les articles multimédia contenus (614) à chaque configuration en faisant appel à des informations en provenance des articles multimédia (614).

**5.** Système d'architecture de logiciel intermédiaire selon l'une quelconque des revendications 3 à 4,
**caractérisé en ce que**
le sous-système de structure multimédia (504a) est apte à utiliser différents types de robots de structure multimédia « MediaStructureRobots » (710) :

au moins un optimiseur de structure « StructureOptimizer » (710a), lequel est utilisé pour simplifier la structure multimédia dès lors qu'une application multimédia distribuée (302) annexe une structure multimédia au système d'architecture de logiciel intermédiaire (304), ou lorsque le système d'architecture de logiciel intermédiaire (304) modifie la structure multimédia ;

au moins un vérificateur de structure « StructureVerifier » (710b), lequel est appliqué pour vérifier si la structure multimédia présente des incohérences sémantiques, et est appelé dès lors qu'une application multimédia distribuée (302) annexe une structure multimédia à l'architecture de logiciel intermédiaire (304), ou lorsque le cadre d'applications de logiciels intermédiaires (304) modifie la structure multimédia,

au moins un robot de commande d'admission « AdmissionControlRobot » (710c), lequel est utilisé pour rechercher les exigences de ressources maximales et minimales d'une nouvelle structure multimédia, et pour décider si la nouvelle structure multimédia est acceptée ou rejetée, et lequel est appelé dès lors qu'une application multimédia distribuée (302) annexe une structure multimédia ;

au moins un créateur de liste de configurations « ConfigurationListCreator » (710d), lequel est appliqué pour créer une liste de configurations à partir de la structure multimédia transmise au gestionnaire de liste de configurations « ConfigurationListManager » (706) en vue de prendre des décisions d'adaptation, et est appelé lorsque la structure multimédia a été modifiée.

**6.** Système d'architecture de logiciel intermédiaire selon l'une quelconque des revendications 3 à 5,
**caractérisé en ce que**
le sous-système de structure multimédia (504a) est apte à autoriser un ajout et/ou un remplacement de robots de structure multimédia « MediaStructureRobots » (710).

**7.** Système d'architecture de logiciel intermédiaire selon l'une quelconque des revendications 3 à 6,
**caractérisé en ce que**
le manipulateur de listes de configurations « ConfigurationListManipulators » (708) est utilisé en tant que des filtres sur les listes de configuration,
mettant par conséquent en oeuvre les étapes ci-dessous consistant à :

supprimer des configurations dont les exigences de ressources sont au-delà des capacités de l'application multimédia distribuée appliquée (302) ;

exécuter des règles définies par l'utilisateur en supprimant des configurations qui n'appliquent pas ces règles ;

exécuter des questions réglementaires dans des cas exceptionnels en supprimant d'autres configurations ;

supprimer des configurations dont les exigences de ressources dépassent les capacités de l'application multimédia distribuée appliquée (302) ;

vérifier la disponibilité des articles multimédia (614) et supprimer les configurations pour lesquelles les articles multimédia (614) ne sont pas accessibles ou pas disponibles ; et ajouter des nouvelles configurations en faisant appel à des services de réseau ou à des convertisseurs disponibles localement lesquels traitent des flux multimédia.

8. Système d'architecture de logiciel intermédiaire selon l'une quelconque des revendications 3 à 7, **caractérisé en ce que**
le manipulateur de listes de configurations « ConfigurationListManipulators » (708) est utilisé pour modifier la liste de configurations en vue de changer les propriétés ou les estimations de consommation de ressources de configurations.

9. Système d'architecture de logiciel intermédiaire selon l'une quelconque des revendications 3 à 8, **caractérisé en ce que**
le gestionnaire de liste de configurations « ConfigurationListManager » (706) informe les utilisateurs de la liste de configurations par l'intermédiaire d'événements correspondants lorsque la liste de configurations a été modifiée.

10. Système d'architecture de logiciel intermédiaire selon l'une quelconque des revendications 3 à 9, **caractérisé en ce que**
le gestionnaire de structure multimédia « MediaStructureManager » (702) appelle les robots de structure multimédia « MediaStructureRobots » (710) selon un ordre prédéfini.

11. Système d'architecture de logiciel intermédiaire selon l'une quelconque des revendications 2 à 10, **caractérisé en ce que** le sous-système de commande multimédia (504b) comporte :

au moins un gestionnaire d'événements déclencheurs « TriggerEventManager » (908), lequel reçoit lesdits événements à partir du sous-système de gestion multimédia (404), de la solution de gestion de ressources locales (804) et de la solution de gestion de réseau local (806), découvre le motif des problèmes indiqués par lesdits événements, et délivre un objectif en termes de consommation de ressources pour le moteur d'adaptation (402) en fonction de ce motif ;

au moins un moteur de décision « DecisionEngine » (904) déclenché par le gestionnaire d'événements déclencheurs « TriggerEventManager » (908), lequel obtient l'actuelle liste de configurations à partir du sous-système de structure multimédia (504a), conserve la connaissance de la configuration active en cours, et sélectionne une nouvelle configuration sur laquelle commuter ; et

au moins un élément d'implémentation de configuration « Configurationimplementor » (906), lequel reçoit en tant qu'entrée, à partir du moteur de décision « DecisionEngine » (904), la nouvelle configuration, conserve des informations relatives aux configurations en cours, et met en oeuvre ladite nouvelle configuration.

12. Système d'architecture de logiciel intermédiaire selon l'une quelconque des revendications 1 à 11, **caractérisé en ce que**
le gestionnaire d'événements déclencheurs « TriggerEventManager » (908) contient une logique permettant de déterminer à quel moment une adaptation est nécessaire en fonction de la disponibilité des ressources ou de problèmes de stabilité.

13. Système d'architecture de logiciel intermédiaire selon l'une quelconque des revendications 1 à 12, **caractérisé en ce que**
suite à la mise en oeuvre d'une adaptation le gestionnaire d'événements déclencheurs « TriggerEventManager » (908) garantit l'existence d'une période de temps configurable au cours de laquelle aucune nouvelle adaptation ne peut être mise en oeuvre, et où la totalité des événements entrants sont ignorés.

14. Système d'architecture de logiciel intermédiaire selon l'une quelconque des revendications 1 à 13, **caractérisé en ce que**
le gestionnaire d'événements déclencheurs « TriggerEventManager » (908) est apte à mettre en oeuvre ses propres mesures en utilisant la largeur de bande disponible d'un chemin spécifique, déclenche le moteur de décision « DecisionEngine » (904) périodiquement ou sur la base d'un modèle heuristique pour commuter sur la configuration avec la consommation de ressources subséquente la plus élevée, ou autorise l'utilisateur à spécifier à quel moment il convient de réaliser l'adaptation et sur quelle configuration si le sous-système de gestion multimédia (404), la solution de gestion de ressources locales (804) et la solution de gestion de réseau local (806) sont uniquement en mesure de transmettre des événements en cas de problèmes.

**15.** Système d'architecture de logiciel intermédiaire selon l'une quelconque des revendications 1 à 14, **caractérisé en ce que**
le moteur de décision « DecisionEngine » (904) est apte à autoriser un mode manuel, dans lequel différentes configurations et les informations incluses dans les événements sont présentées à l'utilisateur lequel décide à quel moment réaliser l'adaptation et quelles configurations utiliser.

**16.** Système d'architecture de logiciel intermédiaire selon l'une quelconque des revendications 1 à 15, **caractérisé en ce que**
la mise en oeuvre d'une nouvelle configuration par l'élément d'implémentation de configuration « ConfigurationImplementor » (906) implique les étapes ci-dessous consistant à:

mettre fin à l'ensemble des articles multimédia (614) qui font partie de la configuration en cours mais qui ne font pas partie de la nouvelle configuration ;
initier l'ensemble des articles multimédia (614) qui ne font pas partie de la configuration en cours mais qui font partie de la nouvelle configuration ;
déclencher la configuration multimédia des nouveaux articles multimédia (614) s'ils peuvent être commandés, définir les configurations multimédia de l'ensemble des articles multimédia pouvant être commandés (614) qui font partie de la configuration en cours et nouvelle s'ils sont distincts de la configuration multimédia en cours.

**17.** Système d'architecture de logiciel intermédiaire selon l'une quelconque des revendications 2 à 16, **caractérisé en ce que**
l'élément d'implémentation de configuration « ConfigurationImplementor » (906) informe l'application multimédia distribuée correspondante (302) sur la présence d'articles multimédia stoppés ou initiés (614) en envoyant des événements d'adaptation à l'application multimédia distribuée respective (302), lesquels dans le cas d'un nouvel article multimédia (614) contiennent également une référence à un objet de lecteur multimédia laquelle peut être utilisée par l'application multimédia distribuée (302) pour lire ledit article multimédia (614) et pour le commander.

**18.** Système d'architecture de logiciel intermédiaire selon l'une quelconque des revendications 1 à 17, **caractérisé en ce que**
l'élément d'implémentation de configuration « ConfigurationImplementor » (906) maintient un contrôleur multimédia pour chaque application multimédia distribuée (302), lequel autorise l'application multimédia distribuée (302) à commander simultanément l'ensemble des articles multimédia continus (614) lui appartenant en ajoutant de nouveaux articles multimédia continus (614) au contrôleur multimédia correspondant, et en supprimant les articles multimédia stoppés (614) de celui-ci.

**19.** Système d'architecture de logiciel intermédiaire selon l'une quelconque des revendications 1 à 18, **caractérisé en ce que**
l'élément d'implémentation de configuration « ConfigurationImplementor » (906) comporte une logique permettant l'utilisation de mécanismes de réservation de réseau le cas échéant.

**20.** Système d'architecture de logiciel intermédiaire selon la revendication 19, **caractérisé en ce que**
dans le cas d'un échec de réservation, l'élément d'implémentation de configuration «ConfigurationImplementor» (906) envoie un événement déclencheur contenant le motif dudit échec au gestionnaire d'événements déclencheurs « TriggerEventManager » (908), lequel initie ensuite un nouveau processus d'adaptation avec un objectif adapté.

**21.** Système d'architecture de logiciel intermédiaire selon l'une quelconque des revendications 2 à 20, **caractérisé en ce que**
le moteur d'adaptation (402) comporte en outre :

au moins une unité de contexte d'adaptation (912), laquelle est utilisée pour stocker et récupérer des données d'adaptation ;

au moins un gestionnaire d'interface utilisateur graphique (914), lequel offre une interface de programmation d'applications pour délivrer une interaction d'utilisateur et surveiller le processus d'adaptation.

**22.** Procédé mis en oeuvre sur un dispositif client (204) ciblé pour prendre en charge des applications multimédia distribuées (302) dans des réseaux de communication hétérogènes en vue d'une adaptation dynamique à une disponibilité de ressources variable, dans lequel :

- au moins un sous-système de gestion multimédia (404) gère des données multimédia en vue d'envoyer périodiquement des événements d'état en provenance d'articles multimédia fonctionnels (614), lesquels contiennent des informations mesurées de paramètres de transmission et paramètres multimédia ;
- au moins un moteur d'adaptation (402) commande l'adaptation desdites applications multimédia distribuées (302) à la disponibilité de ressources en cours ;

dans lequel :

- au moins un gestionnaire d'applications multimédia (502) inclus dans le moteur d'adaptation (402) offre l'interface de programmation d'applications du moteur d'adaptation (402) aux applications multimédia distribuées (302) ;
- au moins un sous-système de structure multimédia (504a) inclus dans le moteur d'adaptation (402) obtient des informations en provenance des applications multimédia distribuées (302), et annexe ces informations à une liste de configurations potentielles ; et
- au moins un sous-système de commande multimédia (504b) inclus dans le moteur d'adaptation (402) met en oeuvre une boucle de régulation laquelle sélectionne dynamiquement une configuration sur la base de la disponibilité de ressources en cours, l'implémente et avertit les applications multimédia distribuées affectées (302) ;

dans lequel le sous-système de commande multimédia (504b) définit des interfaces (802b) au sous-système de structure multimédia (504a), au sous-système de gestion multimédia (404), au moins une solution de gestion de ressources locales (804) et au moins une solution de gestion de réseau local (806) en faisant appel à des enveloppeurs (802a) ajoutant la fonctionnalité requise ;
**caractérisé en ce que**
le sous-système de commande multimédia (504b) met en oeuvre les étapes ci-dessous consistant à :

- gérer la totalité des événements entrants en provenance du sous-système de structure multimédia (504a), du sous-système de gestion multimédia (404), de la solution de gestion de ressources locales (804) et de la solution de gestion de réseau local (806) ;
- déterminer à quel moment une décision d'adaptation doit être prise ;
- définir la cible de l'adaptation en spécifiant la limite des ressources locales qu'une nouvelle configuration est autorisée à utiliser ;
- sélectionner une nouvelle configuration ; et
- mettre en oeuvre la décision en mettant fin à des articles multimédia (614) qui ne font pas partie de la nouvelle configuration, en initiant des articles multimédia (614) qui font pas partie de la nouvelle configuration, en définissant les configurations multimédia d'articles multimédia pouvant être commandés (614), et en envoyant des événements aux applications multimédia distribuées affectées (302).

**23.** Procédé selon la revendication 22,
**caractérisé en ce que**
ledit gestionnaire d'applications multimédia (502) connecte les sous-systèmes contenus au cours du démarrage d'applications multimédia distribuées (302), et appelle les procédés correspondant en vue de découpler et de désaffecter les autres sous-systèmes au cours de la mise hors tension desdites applications multimédia distribuées (302).

**24.** Procédé selon l'une quelconque des revendications 22 et 23,
**caractérisé en ce que**
au moins une installation de structures multimédia « MediaStructureFactory » (704) incluse dans le sous-système de structure multimédia (504a) implémente l'interface en vue de construire des structures multimédia, annexe des structures multimédia au système d'architecture de logiciel intermédiaire (304), supprime des structures multimédia, et change dynamiquement des parties de la structure multimédia ;

au moins un robot de structure multimédia « MediaStructureRobot » (710) inclus dans le sous-système de structure multimédia (504a) pénètre dans la structure multimédia pour, soit manipuler la structure, soit récupérer des informations à partir de la structure ;

au moins un gestionnaire de liste de configurations « ConfigurationListManager » (706) inclus dans le sous-système de structure multimédia (504a) synchronise l'accès à la liste de configurations lue à partir du sous-système de commande multimédia (504b), et ajoute des manipulateurs de listes de configurations « ConfigurationListManipulators » (708) lesquels sont aptes à manipuler la liste de configurations ; et

au moins un gestionnaire de structure multimédia « MediaStructureManager » (702) inclus dans le sous-système de structure multimédia (504a) crée les installations de structures multimédia « MediaStructureFactories » (704) et commande les robots de structure multimédia « MediaStructureRobots » (710) et le gestionnaire de liste de configurations « ConfigurationListManager » (706).

**25.** Procédé selon l'une quelconque des revendications 23 à 24,
**caractérisé en ce que**
le sous-système de structure multimédia (504a) met en oeuvre les étapes ci-dessous de : gestion d'une arborescence de structures multimédia (600) comportant des éléments multimédia et articles multimédia (614) disposant tous deux d'attributs associés (618), lesquels évoluent dynamiquement à mesure que les applications multimédia distribuées (302) ajoutent ou suppriment des informations de structure multimédia, calcul d'une liste de configurations alternatives décrivant différents choix qui résultent de l'évaluation de la structure multimédia, laquelle est requise par le sous-système de commande multimédia (504b) en vue de prendre des décisions d'adaptation ;
association d'une liste d'attributs (618) à chaque configuration en faisant appel aux propriétés des agrégats ; et affectation d'une estimation concernant les ressources requises pour exploiter les articles multimédia contenus (614) à chaque configuration en faisant appel à des informations en provenance des articles multimédia (614).

**26.** Procédé selon l'une quelconque des revendications 24 à 25,
**caractérisé en ce que**
le sous-système de structure multimédia (504a) utilise différents types de robots de structure multimédia « MediaStructureRobots » (710) :

au moins un optimiseur de structure « StructureOptimizer » (710a), lequel est utilisé pour simplifier la structure multimédia dès lors qu'une application multimédia distribuée (302) annexe une structure multimédia au système d'architecture de logiciel intermédiaire (304), ou lorsque le système d'architecture de logiciel intermédiaire (304) modifie la structure multimédia ;

au moins un vérificateur de structure « StructureVerifier » (710b), lequel est appliqué pour vérifier si la structure multimédia présente des incohérences sémantiques, et est appelé dès lors qu'une application multimédia distribuée (302) annexe une structure multimédia à l'architecture de logiciel intermédiaire (304), ou lorsque le cadre d'applications de logiciels intermédiaires (304) modifie la structure multimédia ;

au moins un robot de commande d'admission « AdmissionControlRobot » (710c), lequel est utilisé pour rechercher les exigences de ressources maximales et minimales d'une nouvelle structure multimédia, et pour décider si la nouvelle structure multimédia est acceptée ou rejetée, et lequel est appelé dès lors qu'une application multimédia distribuée (302) annexe une structure multimédia, au moins un créateur de liste de configurations « ConfigurationListCreator » (710d), lequel est appliqué pour créer une liste de configurations à partir de la structure multimédia transmise au gestionnaire de liste de configurations « ConfigurationListManager » (706) en vue de prendre des décisions d'adaptation, et est appelé lorsque la structure multimédia a été modifiée.

**27.** Procédé selon l'une quelconque des revendications 24 à 26,
**caractérisé en ce que**
le sous-système de structure multimédia (504a) autorise un ajout et/ou un remplacement de robots de structure multimédia « MediaStructureRobots » (710).

**28.** Procédé selon l'une quelconque des revendications 24 à 27,
**caractérisé en ce que**
le manipulateur de listes de configurations « ConfigurationListManipulators » (708) est utilisé en tant que des filtres sur les listes de configuration, mettant par conséquent en oeuvre les étapes ci-dessous consistant à :

supprimer des configurations dont les exigences de ressources sont au-delà des capacités de l'application multimédia distribuée appliquée (302) ;
exécuter des règles définies par l'utilisateur en supprimant des configurations qui n'appliquent pas ces règles ;

exécuter des questions réglementaires dans des cas exceptionnels en supprimant d'autres configurations, supprimer des configurations dont les exigences de ressources dépassent les capacités de l'application multimédia distribuée appliquée (302) ;

vérifier la disponibilité des articles multimédia (614) et supprimer les configurations pour lesquelles les articles multimédia (614) ne sont pas accessibles ou pas disponibles ; et ajouter des nouvelles configurations en faisant appel à des services de réseau ou à des convertisseurs disponibles localement lesquels traitent des flux multimédia.

29. Procédé selon l'une quelconque des revendications 24 à 28,
**caractérisé en ce que**
le manipulateur de listes de configurations « ConfigurationListManipulators » (708) est utilisé pour modifier la liste de configurations en vue de changer les propriétés ou les estimations de consommation de ressources de configurations.

30. Procédé selon l'une quelconque des revendications 24 à 29,
**caractérisé en ce que**
le gestionnaire de liste de configurations « ConfigurationListManager » (706) informe les utilisateurs de la liste de configurations par l'intermédiaire d'événements correspondants lorsque la liste de configurations a été modifiée.

31. Procédé selon l'une quelconque des revendications 24 à 30,
**caractérisé en ce que**
le gestionnaire de structure multimédia « MediaStructureManager » (702) appelle les robots de structure multimédia « MediaStructureRobots » (710) selon un ordre prédéfini.

32. Procédé selon l'une quelconque des revendications 23 à 31,
**caractérisé en ce que** le sous-système de commande multimédia (504b) comporte :

au moins un gestionnaire d'événements déclencheurs « TriggerEventManager » (908), lequel reçoit lesdits événements à partir du sous-système de gestion multimédia (404), de la solution de gestion de ressources locales (804) et de la solution de gestion de réseau local (806), découvre le motif des problèmes indiqués par lesdits événements, et délivre un objectif en termes de consommation de ressources pour le moteur d'adaptation (402) en fonction de ce motif ;

au moins un moteur de décision « DecisionEngine » (904) déclenché par le gestionnaire d'événements déclencheurs « TriggerEventManager » (908), lequel obtient l'actuelle liste de configurations à partir du sous-système de structure multimédia (504a), conserve la connaissance de la configuration active en cours, et sélectionne une nouvelle configuration sur laquelle commuter ; et

au moins un élément d'implémentation de configuration « ConfigurationImplementor » (906), lequel reçoit en tant qu'entrée à partir du moteur de décision « DecisionEngine » (904) la nouvelle configuration, conserve des informations relatives aux configurations en cours, et met en oeuvre ladite nouvelle configuration.

33. Procédé selon l'une quelconque des revendications 22 à 32,
**caractérisé en ce que**
le gestionnaire d'événements déclencheurs « TriggerEventManager » (908) contient une logique permettant de déterminer à quel moment une adaptation est nécessaire en fonction de la disponibilité des ressources ou de problèmes de stabilité.

34. Procédé selon l'une quelconque des revendications 22 à 33,
**caractérisé en ce que**
suite à la mise en oeuvre d'une adaptation, le gestionnaire d'événements déclencheurs « TriggerEventManager » (908) garantit l'existence d'une période de temps configurable au cours de laquelle aucune nouvelle adaptation ne peut être mise en oeuvre, et où la totalité des événements entrants sont ignorés.

35. Procédé selon l'une quelconque des revendications 22 à 34,
**caractérisé en ce que**
le gestionnaire d'événements déclencheurs « TriggerEventManager » (908) est apte à mettre en oeuvre ses propres mesures en utilisant la largeur de bande disponible d'un chemin spécifique, déclenche le moteur de décision « DecisionEngine » (904) périodiquement ou sur la base d'un modèle heuristique pour commuter sur la configuration avec la consommation de ressources subséquente la plus élevée, ou autorise l'utilisateur à spécifier à quel moment il convient de réaliser l'adaptation et sur quelle configuration si le sous-système de gestion multimédia (404), la solution de gestion de ressources locales (804) et la solution de gestion de réseau local (806) sont uniquement en mesure de transmettre des événements en cas de problèmes.

**36.** Procédé selon l'une quelconque des revendications 22 à 35,
**caractérisé en ce que**
le moteur de décision « DecisionEngine » (904) autorise un mode manuel, dans lequel différentes configurations et les informations incluses dans les événements sont présentées à l'utilisateur lequel décide à quel moment réaliser l'adaptation et quelles configurations utiliser.

**37.** Procédé selon l'une quelconque des revendications 22 à 36,
**caractérisé en ce que**
la mise en oeuvre d'une nouvelle configuration par l'élément d'implémentation de configuration « ConfigurationImplementor » (906) implique les étapes ci-dessous consistant à:

mettre fin à l'ensemble des articles multimédia (614) qui font partie de la configuration en cours mais qui ne font pas partie de la nouvelle configuration ;
initier l'ensemble des articles multimédia (614) qui ne font pas partie de la configuration en cours mais qui font partie de la nouvelle configuration ;
déclencher la configuration multimédia des nouveaux articles multimédia (614) s'ils peuvent être commandés ;
définir les configurations multimédia de l'ensemble des articles multimédia pouvant être commandés (614) qui font partie de la configuration en cours et nouvelle s'ils sont distincts de la configuration multimédia en cours.

**38.** Procédé selon l'une quelconque des revendications 23 à 37,
**caractérisé en ce que**
l'élément d'implémentation de configuration « ConfigurationImplementor » (906) informe l'application multimédia distribuée correspondante (302) sur la présence d'articles multimédia arrêtés ou initiés (614) en envoyant des événements d'adaptation à l'application multimédia distribuée respective (302) lesquels, dans le cas d'un nouvel article multimédia (614), contiennent également une référence à un objet de lecteur multimédia laquelle peut être utilisée par l'application multimédia distribuée (302) pour lire ledit article multimédia (614) et pour le commander.

**39.** Procédé selon l'une quelconque des revendications 22 à 38,
**caractérisé en ce que**
l'élément d'implémentation de configuration « ConfigurationImplementor » (906) maintient un contrôleur multimédia pour chaque application multimédia distribuée (302) lequel autorise l'application multimédia distribuée (302) à commander simultanément l'ensemble des articles multimédia continus (614) lui appartenant en ajoutant de nouveaux articles multimédia continus (614) au contrôleur multimédia correspondant, et en supprimant les articles multimédia stoppés (614) de celui-ci.

**40.** Procédé selon l'une quelconque des revendications 22 à 39,
**caractérisé en ce que**
l'élément d'implémentation de configuration « ConfigurationImplementor » (906) comporte une logique permettant l'utilisation de mécanismes de réservation de réseau, le cas échéant.

**41.** Procédé selon la revendication 40,
**caractérisé en ce que**
dans le cas d'un échec de réservation l'élément d'implémentation de configuration « ConfigurationImplementor » (906) envoie un événement déclencheur contenant le motif dudit échec au gestionnaire d'événements déclencheurs « TriggerEventManager » (908), lequel initie ensuite un nouveau processus d'adaptation avec un objectif adapté.

**42.** Procédé selon l'une quelconque des revendications 23 à 41,
**caractérisé en ce que**
au moins une unité de contexte d'adaptation (912) stocke et récupère des données d'adaptation, au moins un gestionnaire d'interface utilisateur graphique (914) offre une interface de programmation d'application pour délivrer une interaction d'utilisateur et surveiller le processus d'adaptation.

**43.** Procédé selon l'une quelconque des revendications 22 à 42,
dans lequel

l'adaptation à un disponibilité de ressources variable est déclenchée par des événements en provenance du sous-système de structure multimédia (504a), du sous-système de gestion multimédia (404), de la solution de gestion de ressources locales (804) et de la solution de gestion de réseau local (806),

**caractérisé en ce que**

le sous-système de structure multimédia (504a) envoie des événements suite à des changements dans la liste de configurations ;

le sous-système de gestion multimédia (404) envoie périodiquement des événements d'état en provenance d'articles multimédia fonctionnels (614) lesquels contiennent des informations mesurées de paramètres de transmission et paramètres multimédia ;

la solution de gestion de ressources locales (804) indique si la consommation globale de CPU et/ou de mémoire dépasse certains seuils, ou si la batterie est faible ; et la solution de gestion de réseau local (806) transmet des événements relatifs aux réseaux ou au réseau utilisé(s) à ce moment, et aux connexions entre les réseaux d'accès.

**44.** Procédé selon l'une quelconque des revendications 22 à 43,

dans lequel

un contrôleur de ressources central individuel (1002) est utilisé par un ensemble de terminaux clients (204) comportant des gestionnaires d'événements déclencheurs « TriggerEventManagers » (908) destinés à déclencher une adaptation à une disponibilité de ressources variable ; et

au moins un sous-système de structure multimédia (504a) est exécuté sur chaque terminal client (204) pour autoriser les applications multimédia distribuées (302) à définir leur structure multimédia ;

ledit procédé étant **caractérisé en ce que**

la structure multimédia est transmise au sous-système de commande multimédia local (504b) lequel dans le cas d'une adaptation sélectionne l'ensemble de configurations potentielles sur la base des ressources gérées par le dispositif ;

le sous-système de commande multimédia local (504b) modifie également la liste de configurations potentielles ;

la liste de configurations obtenue est transmise au contrôleur de ressources central (1002) ;

le contrôleur de ressources central (1002) interroge tous les autres terminaux clients (204) en quête de listes de configurations similaires et combine celles-ci dans une liste globale de configurations potentielles tout en conservant les informations connexes aux configurations d'origine ; et

le sous-système de commande multimédia (504b) du contrôleur de ressources central (1002) sélectionne une configuration en prenant en compte la ressource qu'il gère et les valeurs de priorité des configurations, consulte les configurations d'origine qui formaient la configuration sélectionnée au cours de l'agrégation, et indique aux éléments d'implémentation de configuration « ConfigurationImplementors » correspondants (906) des terminaux clients (204) quelle configuration ils doivent mettre en oeuvre.

**45.** Procédé selon l'une quelconque des revendications 22 à 43,

dans lequel

au moins deux contrôleurs de ressources centraux (1002) sont utilisés par un ensemble de terminaux clients (204) comportant des gestionnaires d'événements déclencheurs « TriggerEventManagers » (908) pour déclencher une adaptation à une disponibilité de ressources variable ; et

au moins un sous-système de structure multimédia (504a) est exploité sur chaque terminal client (204) pour permettre aux applications multimédia distribuées (302) de définir leur structure multimédia ;

ledit procédé étant **caractérisé en ce que**

une hiérarchie entre les contrôleurs de ressources centraux (1002) est introduite, dans laquelle le premier contrôleur de ressources central (1002) de la hiérarchie calcule la liste globale de configurations potentielles et supprime toutes les configurations qui ne sont pas possibles en raison de la disponibilité des ressources gérées localement ;

la liste réduite est transmise au contrôleur de ressources central successif (1002) dans la hiérarchie lequel à son tour supprime les configurations ne correspondant pas à son objectif de ressources ;

le dernier contrôleur de ressources central (1002) dans la hiérarchie prend la décision finale et informe le premier contrôleur de ressources central (1002) lequel à son tour informe les terminaux clients (204) concernant les configurations à mettre en oeuvre, et

lorsque les informations concernant la façon dont les configurations ont été assemblées à partir des configurations de dispositif sont transmises avec la liste de configurations, le dernier contrôleur de ressources central (1002) informe directement les terminaux clients (204).

**46.** Procédé selon la revendication 45,

**caractérisé en ce que**

les informations d'état du moteur d'adaptation (402) sur un premier terminal client (204) comportant la structure multimédia, la liste de configurations, les configuration en cours et pour chaque article multimédia continu (614) l'heure du multimédia en cours peuvent être transférées à un second terminal client (204).

**47.** Procédé selon la revendication 46,
**caractérisé en ce que**
le moteur d'adaptation (402) sur le second terminal client (204) restore l'état d'origine en faisant appel auxdites informations d'état en vue de mettre en oeuvre une adaptation, étant donné que le second terminal client (204) peut présenter des capacités distinctes et une disponibilité de ressources différente de celles du premier terminal client (204).

**48.** Terminal client connecté à une architecture de serveur client d'un environnement informatique distribué,
**caractérisé en ce que**
ledit terminal client (204) comporte un système d'architecture de logiciel intermédiaire (304) selon l'une quelconque des revendications 1 à 21.

**49.** Utilisation d'un procédé selon l'une quelconque des revendications 22 à 47 dans un navigateur de document multimédia pour exploiter des applications de recherche multimédia (200) sur un dispositif terminal client (204).

high bandwidth    low bandwidth

adaptation

102    104

100

FIG. 1

200

206
Multimedia
(Streaming)
Server

102

202

208
WWW Server

media streams

Clients may have
different network
technologies available:

WLAN

GPRS

GSM

Client
204

206
Multimedia
(Streaming)
Server

EP 1 317 109 B1

FIG. 2

300

204

302 Application (...) Application 302

**MiddlewareFramework** 304

Operating System 306

Hardware 308

FIG. 3

400

adaptation engine — 402

media management subsystem — 404

| Demulti plexers | Codecs | Effects | Multi plexers | Renderer |

406a    406b    406c    406d    406e

**FIG. 4**

500

Multimedia application manager — 502

504a — media structure subsystem     media control subsystem — 504b

media management subsystem — 404

| Demulti plexers | Codecs | Effects | Multi plexers | Renderer |

406a    406b    406c    406d    406e

**FIG. 5**

FIG. 6

FIG. 7

FIG. 8

EP 1 317 109 B1

*900*

*504a*

MSS

Interface  *902*

Trigger Event Manager  *908*

triggers

Decision Engine  *904*

trigger events

Interface  Interface  Interface  3x *910*

Local Network Management (e.g. OS)  Local Resource Management (e.g. OS)  Media Management Subsytem

new configuration

modifies

Configuration Implementor  *906*

influence

*806*  *804*  *404*

FIG. 9

FIG. 10

FIG. 11

EP 1 317 109 B1

EP 1 317 109 B1

FIG. 12

**EP 1 317 109 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1158740 A

- EP 1113628 A

**Non-patent literature cited in the description**

- **Ott M et al.** *An architecture for adaptive QoS and its application to multimedia systems design,* 10 April 1998
- **Barzilai T P et al.** *Design and implementation of an rsvp-based quality of service architecture for an integrated services internet,* 01 April 1998
- **F. Chang ; V. Karamcheti.** Automatic Configuration and Run-time Adaptation of Distributed Applications. *Ninth IEEE Symposium on High Performance Distributed Computing,* August 2000
- **F. Chang ; V. Karamcheti.** A Framework for Automatic Adaptation of Tunable Distributed Applications. *Cluster Computing: The Journal of Networks, Software and Applications,* 2001, vol. 4 (1
- **C. Diot ; C. Huitema ; T. Turletti.** Multimedia Applications Should Be Adaptive. *HPCS'95 Workshop,* 1998, ftp://www.inria.fr/rodeo/diot/ncahpcs.ps.gz http://citeseer.nj.nec.com/diot98multimedia. html
- **E. Gamma ; R. Helm ; R. Johnson ; J. Vlissides.** Design Patterns, Elements of Reusable Object-Oriented Software. Addison-Wesley, 1995
- **J. Gecsei.** Adaptation in Distributed Multimedia Systems. *IEEE Multimedia,* April 1997, vol. 4 2, 58-66
- **B. Li.** Agilos: A Middleware Control Architecture for Application-Aware Quality-of-Service Adaptations. *PhD Dissertation,* May 2000
- **B. Noble.** System Support for Mobile, Adaptive Applications. *IEEE Personal Communications,* February 2000, vol. 7 (1
- **B. Noble ; M. Satyanarayanan ; D. Narayanan ; J.E. Tilton ; J. Flinn ; K. Walker.** Agile Application-Aware Adaptation for Mobility. *Proceedings of the 16th ACM Symposium on Operating System Principles,* October 1997

- **M. Satyanarayanan ; B. Noble ; P. Kumar ; M. Price.** Application-Aware Adaptation for Mobile Computing. *Proceedings of the 6th ACM SIGOPS European Workshop,* September 1994
- **M. Satyanarayanan.** Fundamental Challenges in Mobile Computing. *15th ACM Symposium on Principles of Distributed Computing,* May 1996
- Mobile Computing: Where's the Tofu?. *Proceedings of the ACM Sigmobile,* April 1997, vol. 1 (1
- **H. Schulzrinne ; A. Rao ; R. Lanphier.** Real-Time Streaming Protocol (RTSP). *IETF Request for Comments: 2326,* April 1998
- Synchronized Multimedia Integration Language (SMIL) 1.0 Specification. *W3C Recommendation,* 15 June 1998
- **R. Steinmetz.** Multimedia-Technologie: Einführungen und Grundlagen. Springer-Verlag, 1993
- SureStream™ - Delivering Superior Quality and Reliability. *Real Networks Whitepaper,* 26 September 2001, http://www.realnetworks.com/devzone/library/whitepapers/surestrm.html
- **A. Vogel ; B. Kerhervé ; G. v. Bochmann ; J. Gecsei.** Distributed Multimedia and QoS: A Survey. *IEEE MultiMedia,* 1995, vol. 2 (2), 10-19
- **T. Wahl ; S. Wirag ; K. Rothermel.** TIEMPO: Temporal Modeling and Authoring of Interactive Multimedia. *IEEE 2nd. Intl. Conference on Multimedia Computing and Systems,* May 1995, 274-277
- Modeling of Adaptable Multimedia Documents. Interactive Distributed Multimedia Systems and Telecommunication Services, 4th International Workshop, IDMS'97. September 1997, 420-429